# FASCICULE DE BREVET EUROPEEN

(11) **EP 1 092 000 B1**
(45) Date de publication et mention de la délivrance du brevet: **08.09.2004**
(21) Numéro de dépôt: 99925121.8
(22) Date de dépôt: 17.06.1999
(51) Int. Cl.: C09C 3/08, C09D 17/00, C08K 9/04, C08L 75/04, C09C 1/02, B29C 44/46

(54) **TRAITEMENT DE CHARGES MINERALES PAR UN PHOSPHATE, CES CHARGES ET LEUR UTILISATION**
BEHANDLUNG VON MINERALFÜLLSTOFFEN MIT PHOSPHATEN, DIESE FÜLLSTOFFE UND DEREN VERWENDUNG
METHOD FOR PROCESSING MINERAL FILLERS WITH A PHOSPHATE, SAID FILLERS AND THEIR USES

(30) Priorité: 30.06.1998 FR 9808483
(43) Date de publication de la demande: 18.04.2001
(73) Titulaire: OMYA S.A.S, 75015 Paris (FR)
(72) Inventeur: FICHOU, Jean-Pierre, F-92300 Levallois Perret (FR); HUSSON, Maurice, F-51000 Chalons en Champagne (FR); RAVET, Georges, F-69290 Saint Genis les Ollières (FR); BLANCHARD, Pierre, F-01600 Reyrieux (FR)
(74) Mandataire: Richebourg, Michel François
(86) Numéro de dépôt international: PCT/FR1999/001456
(87) Numéro de publication internationale: WO 2000/000553

(56) Documents cités:
- EP-A- 0 029 137
- EP-A- 0 216 516
- EP-A- 0 496 150
- EP-A- 0 726 298
- BE-A- 667 292
- BE-A- 670 958
- DE-A- 1 792 798
- FR-A- 2 286 179
- GB-A- 1 169 352
- DATABASE WPI Week 8346 Derwent Publications Ltd., London, GB; AN 83-816675 XP002110556 & JP 58 168663 A (ASAHI ECKART), 5 octobre 1983 (1983-10-05)
- DATABASE WPI Week 9134 Derwent Publications Ltd., London, GB; AN 91-248028 XP002110557 & JP 03 074472 A (ASAHI KASEI METALS), 29 mars 1991 (1991-03-29)
- DATABASE WPI Week 8734 Derwent Publications Ltd., London, GB; AN 87-238838 XP002110558 & JP 62 161862 A (DAINICHISEIKA COLOR CHEM.), 17 juillet 1987 (1987-07-17)

## Description

La présente invention concerne le secteur technique de la fabrication des mousses de polyuréthanne, et plus particulièrement celui des charges minérales utilisées dans ce secteur, notamment les charges de type carbonate, hydroxyde, silicate, sulfate, et charges minérales analogues.

On sait que la mousse de polyuréthanne (ou PUR) est obtenue par la réaction d'un polyol sur un isocyanate comme le toluène-diisocyanate ou TDI, avec une réaction concurrente de l'isocyanate sur l'eau.

Lors de la production de mousse bloc, on introduit dans la « tête de mélange » soit d'une part un mélange maître de polyol et d'additif minéral et d'autre part le complément de polyol, le système de catalyse tel que la catalyse amine, la catalyse étain, ou autre catalyse, un ou plusieurs agents tensio-actif généralement de type silicone, l'eau, le toluène-diisocyanate, éventuellement un agent auxiliaire de moussage qui peut être le chlorure de méthylène, de l'acétone et divers additifs tels que des agents stabilisants thermiques, soit d'une part le polyol dans lequel le mélange maître a été préalablement dilué à la concentration recherchée et d'autre part les autres additifs précédemment cités (catalyse, agent tensio-actif, etc...).

La réaction de l'eau sur l'isocyanate, catalysée par l'amine, génère du CO₂, ce qui forme la mousse.

Pour diminuer le prix de revient au litre et au kilogramme des objets moulés ou non à partir des mousses de polyuréthanne souples, semi-rigides ou rigides, il s'avère de plus en plus nécessaire d'augmenter la quantité de charge présente dans les mousses de polyuréthanne rigides, semi-rigides ou souples tout en conservant ou améliorant leurs propriétés physico-chimiques telles que par exemple la compression ou le déchirement ou bien encore des propriétés esthétiques ou autres telles que l'ignifugation, demandées dans divers domaines de l'industrie tels que notamment les transports par exemple l'automobile, l'ameublement, le bâtiment ou autres.

Il existe à ce jour plusieurs procédés pour introduire les charges minérales dans ces composés polyuréthannes.

Dans un premier type de procédé (FR 2 651 236), le carbonate de calcium est introduit dans un plastifiant pour polyuréthanne. Ce procédé d'obtention d'une suspension de charge dans un plastifiant qui permet d'augmenter le taux de charge dans le composé polyuréthanne s'avère de coût élevé et de mise en oeuvre trop pointue pour pouvoir être utilisé dans la fabrication de mousses polyuréthannes souples, semi-rigides ou rigides et cause une dégradation des propriétés physico-chimiques des mousses obtenues à partir de cette suspension de charge.

On a ensuite cherché à introduire les charges minérales dans les mousses de polyuréthanne souples, semi-rigides ou rigides par un moyen peu onéreux, simple, et sans problème de baisse significative de réactivité des mousses polyuréthannes.

Dans ce but, des procédés d'introduction de la charge dans le polyol, un des constituants du polyuréthanne, sont connus de l'homme du métier.

Un premier type de procédé enseigne le greffage d'acide méthacrylique (DE 2 654 746, DE 2 714 291, DE 2 739 620) ou d'un autre composé vinylique comme le styrène sur le polyol. Mais ce type de procédé ne permet pas à la suspension de carbonate de calcium dans le polyol d'être exploitable car trop difficilement manipulable par suite d'une viscosité trop élevée et d'une mauvaise répartition de la charge dans le milieu, et des problèmes de sédimentation de la suspension.

Un autre type de procédé consiste à traiter la charge en surface préalablement à son introduction dans le polyol au moyen d'un agent qui est par exemple un alcool ayant 8 à 14 atomes de carbone (FR 2 531 971), ou un phosphate d'acide hydroxycarboxylique (EP 0 202 394).

Mais ces procédés produisent le même type d'inconvénients que .ceux précités puisque l'utilisateur se trouve confronté à des problèmes de mauvaise dispersibilité dans le polyol de la charge minérale ainsi traitée.

Il a également été mis au point (EP 0 726 298) un procédé de traitement d'une charge minérale au moyen d'au moins un agent de traitement de type phosphate organique ainsi qu'une charge minérale traitée, qui permet l'obtention d'une suspension de charge minérale dans les polyols à haute teneur en charge et de faible viscosité c'est-à-dire une suspension homogène ni soumise à sédimentation, ni soumise à décantation, ni soumise à un épaississement rédhibitoires pour la fabrication des mousses de polyuréthanne rigides, semi-rigides ou souples.

Selon ce document, on procède au traitement de charges minérales, en vue de leur mise en suspension dans les polyols, à l'aide d'au moins un agent de traitement du type phosphate organique de formule générale (1) : 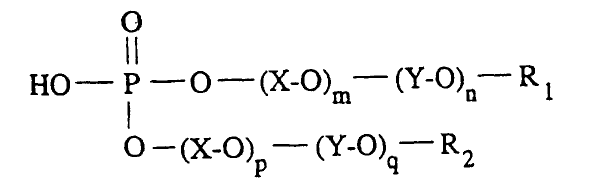
avec R₁ = soit H soit alkyle en C₈ à C₄₀ soit aryle ou alkylaryle ou arylalkyle en C₆ à C₄₀
avec R₂ = soit alkyle en C₈ à C₄₀ soit aryle ou alkylaryle ou arylalkyle en C₆ à C₄₀
X = -CH₂- CH₂-
Y= -CH(CH₃)-CH₂- ou -CH₂-CH(CH₃)-
(m + n) varie de 0 à 30 avec m ≤ 30 et n ≤ 30
(p + q) varie de 0 à 30 avec p ≤ 30 et q ≤ 30

Cette dernière technique donne satisfaction mais il a été remarqué un problème nouveau lié à une technique particulière et plus récente de fabrication des mousses de PUR.

Selon le procédé conventionnel, on introduit dans la "tête de mélange" d'une part un mélange de polyol et de charge minérale, et d'autre part le complément de polyol, le TDI, un agent auxiliaire de moussage tel que du chlorure de méthylène, et divers additifs comme un sel d'étain et un tensio-actif, généralement du type silicone. La réaction génère du CO₂ in situ, comme indiqué plus haut, ce qui forme la mousse. La formation de la mousse passe par deux phases principales, la première consistant en le début du moussage, et la seconde en la stabilisation du bloc de mousse, à la suite de quoi on obtient une masse de mousse de PUR que l'on découpe en blocs de dimensions souhaitées, pour la production de matelas, l'habillage de sièges, etc...

Un nouveau procédé a été développé ces dernières années, et décrit notamment dans les brevets EP 0 645 226 et WO 96 / 00644, selon lequel le CO₂ est injecté directement ou par la veine polyol à l'état liquide dans la tête de mélange. Le CO₂ est donc utilisé comme agent auxiliaire de gonflement.

Ce procédé présente des avantages notamment en termes de réduction tout à fait notable de l'emploi et de la formation de produits toxiques ou inflammables, et devrait prendre de plus en plus d'importance dans l'avenir.

Ce nouveau procédé pose cependant des problèmes techniques complémentaires aux fabricants de mousse de PUR.

Il semble qu'il soit de plus nécessaire, pour une mise en oeuvre correcte de ce type de procédé, dénommé « mousse de PUR au CO₂ », ou « procédé au CO₂ », de réduire de manière significative le temps nécessaire au mélange de la charge avec le polyol, et d'améliorer la qualité du mélange.

On a découvert selon l'invention que l'on parvenait à résoudre ce problème du temps de mélange et les difficultés du procédé nouveau au CO₂ par un traitement de la charge minérale d'une manière comparable aux techniques décrites dans le EP 0 726 298, mais amélioré de manière significative.

Il a également été découvert, de manière surprenante et à l'occasion des recherches sur le procédé au CO₂, que le procédé de traitement de charges minérales selon l'invention améliore également les procédés classiques utilisés pour la fabrication de mousses de PUR.

L'invention n'est donc pas limitée aux procédés au CO₂ qui était le problème technique à résoudre en premier lieu, mais a au contraire une portée générale.

Il a encore été constaté que le procédé de traitement de charges minérales selon l'invention s'applique aux procédés de fabrication de matériaux composites à matrice de PUR, cellulaire ou non, et ce quelle que soit la nature de la charge utilisée: CaCO₃, talcs, kaolins, hydroxyde d'aluminium, hydroxyde de magnésium, etc... avec de nombreuses applications dans le domaine des pièces pour l'industrie automobile, pour le secteur du transport, notamment routier ou ferroviaire, et des pièces industrielles d'applications diverses.

Par « matériaux composites » ou « PUR composites », on entend ici des polyuréthannes renforcés avec des fibres végétales ou de verre ou de quartz ou des fibres synthétiques, en général des fibres coupées, ou analogues. Par « PUR cellulaire » on entend ici des polyuréthannes expansés ou non.

L'invention concerne un procédé de traitement de charges minérales de granulométrie particulière à l'aide d'agents de traitement de type phosphate organique, incluant une étape de désagglomération, et éventuellement une étape de sélection, dans le but d'améliorer les techniques de fabrication de mousses de PUR soit par moussage sans agent auxiliaire de gonflement, soit par moussage avec un agent auxiliaire de gonflement comme le chlorure de méthylène, l'acétone ou le CO₂ ou autres, et de PUR composites, réduisant le temps de mélange de la charge ainsi traitée, du polyol et des autres réactifs, et résolvant les difficultés particulières rencontrées au niveau des agglomérats de charges qui colmatent les disperseurs statiques mis en place pour le CO₂ et qui contribuent à l'affaiblissement des propriétés mécaniques des mousses de PUR et des composites cellulaires ou non, comme par exemple la résistance à la déchirure des mousses de PUR.

Plus précisément, l'invention concerne un procédé de traitement de charges minérales caractérisé en ce que ladite charge :
a) est traitée par au moins un composé de formule générale (1) : 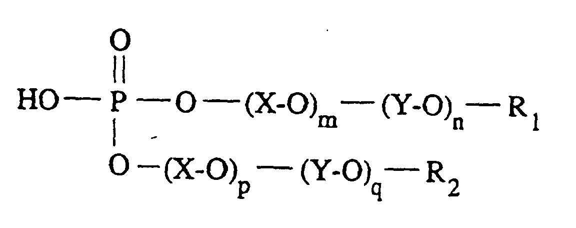
   avec R₁ = soit H soit alkyle en C₈ à C₄₀ soit aryle ou alkylaryle ou arylalkyle en C₆ à C₄₀
   avec R₂ = soit alkyle en C₈ à C₄₀ soit aryle ou alkylaryle ou arylalkyle en C₆ à C₄₀
   X = -CH₂-CH₂- ou -CH(CH₃)-CH₂-
   ou - CH₂-CH(CH₃)- ou -(CH₂)₅-CO-
   Y = -CH₂-CH₂- ou -CH(CH₃)-CH₂-
   ou -CH₂-CH(CH₃)- ou -(CH₂)₅-CO-
   X et Y étant identiques ou différents,
   (m + n) varie de 0 à 60 ( bornes comprises) ainsi que (p+q)
   avec 0 ≤ m + n ≤ 60 et 0 ≤ p + q ≤ 60 lorsque X = Y = -CH₂-CH₂- et
   avec (1 ≤ m ≤ 10 et 1 ≤ p ≤ 10) et (0 ≤ n ≤ 59 et 0 ≤ q ≤ 59) lorsque X est différent de Y
b) subit une étape de désagglomération et
c) subit éventuellement une étape de sélection.

Ladite charge est de granulométrie particulière telle que décrite ci dessous.

Par « désagglomération » on désigne une étape selon laquelle on réduit le nombre d'agglomérats dans un appareil approprié, de type broyeur, plus particulièrement de type broyeur à broches ou de type « attritor » connu. L'évaluation des agglomérats peut se faire de manière connue selon la procédure à la jauge de North, qui est normalisée (ISO 1524 ).

Par « sélection », on désigne l'opération visant à isoler une certaine plage dans la granulométrie par passage dans des « séparateurs » (tamis, séparateurs à ailettes, etc...connus). Une telle opération n'influe pas sur la qualité du produit mais l'homme du métier pourra décider de la mettre en oeuvre ou non afin d'optimiser le produit en fonction de l'application finale envisagée.

Par « granulométrie particulière », on entend selon l'invention que la granulométrie ne doit être ni trop fine ni trop grossière, obtenue directement par broyage ou par mélange de charges. Selon un exemple représentatif mais non limitatif, destiné à une bonne compréhension de ce critère, la charge peut être sensiblement représentée au plan granulométrique par le diamètre moyen d50. Ce diamètre moyen des charges minérales selon l'invention sera compris entre 0,1 micromètres et 15 micromètres, préférentiellement entre 0,1 micromètres et 10 micromètres et très préférentiellement entre 0,3 micromètres et 8 micromètres. De plus, l'homme du métier saura cerner les charges qui remplissent cette condition.

L'invention concerne également les charges minérales de granulométrie particulière traitées par ce type d'agent de traitement et par une étape de désagglomération, et éventuellement par une étape de sélection, présentant un temps de mélange plus court de la charge ainsi traitée avec le polyol et les autres réactifs, et destinées à être mises en suspension dans un polyol en vue de leurs utilisations dans la fabrication de mousses polyuréthannes soit par moussage sans agent auxiliaire de gonflement, soit par moussage avec un agent auxiliaire de gonflement comme le chlorure de méthylène, l'acétone ou le CO₂ ou autres, ou de PUR composites, et plus particulièrement les charges minérales de type carbonate traitées par ce procédé et dans ce but.

L'invention concerne aussi les suspensions dans les polyols de ces charges minérales ainsi traitées, préparées pour être incorporées dans un procédé de fabrication de mousses de PUR soit par moussage sans agent auxiliaire de gonflement, soit par moussage avec un agent auxiliaire de gonflement comme le chlorure de méthylène, l'acétone ou le CO₂ ou autres, ainsi que leurs utilisations dans la fabrication des mousses polyuréthannes souples, semi-rigides ou rigides, par le procédé soit par moussage sans agent auxiliaire de gonflement, soit par moussage avec un agent auxiliaire de gonflement comme le chlorure de méthylène, l'acétone ou le CO₂ ou autres, et pour la fabrication de polyuréthannes composites.

L'invention concerne de plus les mousses elles-mêmes obtenues par un procédé soit par moussage sans agent auxiliaire de gonflement, soit par moussage avec un agent auxiliaire de gonflement comme le chlorure de méthylène, l'acétone ou le CO₂ ou autres, ou encore les polyuréthannes composites, cellulaires ou non, contenant les charges traitées selon l'invention, en mélange avec le polyol.

L'invention concerne encore l'utilisation des mousses polyuréthannes souples semi-rigides ou rigides, ou composites, cellulaires ou non, ainsi obtenues, à la fabrication d'objets moulés ou non.

L'invention concerne également les prémélanges des charges traitées selon l'invention avec un polyol, et notamment dans les proportions adaptées à la fabrication des polyuréthannes, et plus particulièrement des mousses de polyuréthannes, ou des PUR composites.

Selon un mode de réalisation préféré de l'invention, on utilisera directement la charge sortant des appareils de fabrication, dont la teneur en humidité se situe à un niveau compatible avec son application.

De manière tout à fait préférée, on effectuera le traitement de la charge minérale par un phosphate acide d'alcool aliphatique ramifié ou non en C₈ à C₂₀ sur lequel est condensé de 0 à 12 motifs d'oxyde d'éthylène, et comprenant éventuellement un mélange de mono et diesters.

Le traitement selon l'invention pourra être mis en oeuvre par voie sèche ou par voie humide.

Les charges minérales ainsi traitées, selon l'invention et permettant l'obtention de suspensions stables et homogènes dans les polyols sont choisies parmi les charges minérales conférant aux mousses de polyuréthannes et aux PUR entrant dans la composition de composites à matrice PUR, cellulaire ou non, des propriétés physico-chimiques compatibles avec l'utilisation de ces produits à la fabrication d'objets moulés ou non et sont notamment choisies parmi les carbonates, phosphates et sulfates d'alcalino-terreux naturels ou synthétiques tels que notamment les carbonates de calcium d'origine naturelle ou synthétique, le carbonate de magnésium, le carbonate de zinc, les sels mixtes de magnésium et de calcium tels que les dolomies, la chaux, la magnésie, le sulfate de baryum, les sulfates de calcium, les hydroxydes de magnésium, d'aluminium, la silice, la wollastonite, les argiles et autres silico-alumineux tels que les kaolins, les silico-magnésiens tels que le talc, le mica, les billes de verre pleines ou creuses, les oxydes métalliques tels que par exemple l'oxyde de zinc, les oxydes de fer, l'oxyde de titane et plus particulièrement choisies parmi les carbonates de calcium naturels ou précipités tels que craie, calcite, marbre, les dolomies, l'hydroxyde d'aluminium, l'hydroxyde de magnésium, le talc ou leurs mélanges.

Les charges minérales selon l'invention se distinguent de l'art antérieur par le fait qu'elles conservent leur hydrophilie tout en ayant une prise de polyol diminuée d'au moins 15 % et préférentiellement d'au moins 20 % par rapport à la charge minérale non traitée et plus particulièrement en ce qu'elles sont obtenues par le procédé de traitement selon l'invention.

Par « préférentiellement », on entend le fait que l'invention couvre aussi les valeurs entre 15 % et 20 % étant bien entendu que l'efficacité des résultats est d'autant meilleure que la diminution de la prise de polyol est plus élevée.

La prise de polyol qui traduit le pouvoir d'absorption des charges est par définition le nombre de milligrammes ou de grammes de polyol utilisé pour 100 g ou 100 ml de matière de charge dans les conditions de la mesure de l'essai déterminées par une méthode dérivant de la norme ISO 787/5.

Les polyols utilisés appartiennent aux familles des polyéthers et des polyesters-polyéthers, et des polyesters.

Parmi les polyéthers polyols courants peuvent être cités par exemple, les produits d'addition d'oxyde de propylène sur un polyol simple tel que par exemple le glycol, le glycérol, le triméthylolpropane, le sorbitol, en présence ou non d'oxyde d'éthylène. Mais peuvent être également cités des polyéthers polyols spéciaux tels que par exemple des polyéthers à base aminés, obtenus par addition d'oxyde de propylène ou éventuellement d'oxyde d'éthylène sur des amines, des polyéthers halogénés, des polyéthers greffés résultant de la copolymérisation de styrène et d'acrylonitrile en suspension dans un polyéther, ou encore le polytétraméthylèneglycol.

Parmi les polyesters polyols peuvent être mentionnés par exemple ceux résultant de la polycondensation de polyalcools sur des polyacides ou leurs anhydrides tels que des diacides, tels que par exemple adipique, phtalique ou autres, réagissant avec des diols (par exemple éthylène glycol, propylène glycol, butylène glycol ou autres) des triols (par exemple, glycérol, triméthylolpropane ou autres) et des tétrols (par exemple le pentaérythritol ou autres, seuls ou en mélange).

Mais parmi les polyols peuvent être également évoqués des composés divers hydroxylés tels que par exemple les polybutadiènes hydroxylés, les prépolymères à terminaisons hydroxyles (résultant de la réaction d'un excès de polyol sur un diisocyanate) ou encore les polyols simples tels que par exemple glycérol, aminoalcools mis en oeuvre en petite quantité avec les polyéthers polyols ou les polyesters polyols pour augmenter la réticulation.

Les suspensions de charges minérales dans les polyols, selon l'invention qui peuvent également contenir d'autres produits minéraux et/ou organiques tels que catalyseurs et/ou anti-oxydants et/ou autres se caractérisent en ce que la concentration en matière sèche des matériaux minéraux traités peut atteindre 80 % en poids, et en ce qu'elles ne soient soumises ni à décantation, ni à sédimentation, ni à un épaississement rédhibitoires après un stockage au repos de 7 jours pour la fabrication de mousses polyuréthannes souples, semi-rigides ou rigides c'est-à-dire ayant une viscosité apparente Brookfield stable et inférieure à celle des suspensions des charges minérales non traitées et en ce qu'elles contiennent 0,5 % à 3 % en poids par rapport au poids de la charge minérale d'au moins un agent de traitement de formule générale (1).

Un but supplémentaire de l'invention est la mise au point des suspensions homogènes, stables et de faible viscosité dans les polyols de ces charges minérales traitées, caractérisées par une concentration en poids de charges minérales pouvant atteindre 80 %, et une teneur en agent de traitement allant de 0,5 % à 3 % en poids par rapport au poids sec de la charge et ne comportant pas d'agglomérats.

Ces suspensions homogènes, stables et de faible viscosité selon l'invention sont facilement manipulables car elles ne présentent, dans des conditions d'utilisation normales pour l'homme du métier, ni phénomène de décantation c'est-à-dire séparation en deux phases, ni phénomène de sédimentation c'est-à-dire présence d'un dépôt dur au fond du bac dans lequel est stockée la suspension, ni épaississement rédhibitoires et permettent ainsi l'obtention de mousses polyuréthannes souples, semi-rigides ou rigides, ou de PUR composites, cellulaires ou non, avec d'excellentes propriétés physico-chimiques.

Enfin un autre but de l'invention est l'utilisation de ces dispersions homogènes stables et de faible viscosité de charges minérales dans la fabrication des mousses polyuréthannes souples, semi-rigides ou rigides, ou des composites cellulaires ou non, ainsi que l'utilisation de ces dites mousses ou de ces dits composites dans la fabrication d'objets moulés ou non.

Les suspensions ainsi chargées, homogènes, stables et de faibles viscosités, selon l'invention ont la particularité de pouvoir être utilisées dans la fabrication des mousses polyuréthannes qu'elles soient souples, semi-rigides ou rigides, ou dans la fabrication des polyuréthannes composites cellulaires ou non.

De plus les mousses polyuréthannes souples, semi-rigides ou rigides, ou les polyuréthannes composites cellulaires ou non, obtenus par l'utilisation des suspensions dans les polyols selon l'invention des charges traitées selon l'invention sont utilisées pour l'élaboration d'objets moulés ou non.

D'autres caractéristiques et avantages de l'invention apparaîtront mieux à la lecture de la description qui va suivre.

La portée et l'intérêt de l'invention seront mieux perçus grâce aux exemples suivants qui ne sauraient présenter aucun caractère limitatif.

### EXEMPLE 1 :

### A. Essais de préparation de diverses charges traitées

A cet effet, on a effectué les essais n° 1 à 10 en utilisant trois bases différentes de charge et un agent de traitement de type phosphate, désigné « AGT » ci-après, et dans les différents tableaux.

### Essais n° 1 à 4 :

Ces essais illustrent l'invention et mettent en oeuvre comme agent de traitement un mélange de mono- et diester de phosphate acide d'alcool décylique avec 5 moles d'oxyde d'éthylène et comme charge une craie de Champagne dont le diamètre moyen est de 2 micromètres (produit A).

### Essai n° 1 :

Pour cet essai, on procède à la fabrication de la charge traitée selon le procédé de l'invention par l'introduction de l'agent selon l'invention (AGT) simultanément avec l'opération de désagglomération dans un broyeur à broches, suivie d'une sélection fine mettant en oeuvre un sélecteur 24 ailettes

### Essai n° 2 :

Pour cet essai, on procède à la fabrication de la charge traitée selon le procédé de l'invention par l'introduction de l'agent selon l'invention (AGT) avant l'opération de désagglomération et de sélection décrite à l'essai n° 1.

### Essai n° 3 :

Pour cet essai, on procède à la fabrication de la charge traitée selon le procédé de l'invention par l'introduction de l'agent selon l'invention (AGT) avant l'opération de désagglomération dans un broyeur à broches, suivie d'une sélection fine mettant en oeuvre un sélecteur 16 ailettes

### Essai n° 4 :

Pour cet essai, on procède à la fabrication de la charge traitée selon le procédé de l'invention par l'introduction de l'agent selon l'invention (AGT) avant l'opération de désagglomération dans un broyeur à broches, sans opération de sélection.

### Essais n° 5 à 7 :

Ces essais illustrent l'invention et mettent en oeuvre comme agent de traitement un mélange de mono- et diester de phosphate acide d'alcool décylique avec 5 moles d'oxyde d'éthylène et comme charge une calcite dont le diamètre moyen est de 1,8 micromètres (produit B).

### Essai n° 5 :

Pour cet essai selon l'invention, il est mis en oeuvre le même procédé de fabrication de la charge traitée selon l'invention que pour l'essai n° 4.

### Essai n° 6 :

Pour cet essai selon l'invention, il est mis en oeuvre le même procédé'de fabrication de la charge traitée selon l'invention que pour l'essai n° 2.

### Essai n° 7 :

Pour cet essai selon l'invention, il est mis en oeuvre le même procédé de fabrication de la charge traitée selon l'invention que pour l'essai n° 1.

### Essai n° 8 :

Cet essai illustre l'art antérieur et met en oeuvre comme agent de traitement un mélange de mono- et diester de phosphate acide d'alcool décylique avec 5 moles d'oxyde d'éthylène et comme charge une craie de Champagne de diamètre moyen de 2,4 micromètres (produit C).

Pour ce faire, on procède à l'introduction dans un broyeur à boulets de laboratoire, d'une capacité de 15 l, contenant 9 kg de charge broyante, 3 kg de produit C (craie) et 30 g du AGT puis au broyage du mélange pendant 4 heures pour obtenir la granulométrie du produit A, sans étape de désagglomération.

### Essai n° 9 :

Cet essai illustre l'invention et met en oeuvre comme agent de traitement un mélange de mono- et diester de phosphate acide d'alcool décylique avec 5 moles d'oxyde d'éthylène et comme charge une craie de Champagne de diamètre moyen de 2,4 micromètres (produit C).

Pour ce faire, on effectue le mélange de 3 kg de Produit C avec 1,6 kg d'eau et 30 g de AGT, et on introduit ce « slurry » dans un broyeur à boulets de laboratoire, d'une capacité de 15 l, contenant 9 kg de charge broyante, broyage pendant 8 heures pour obtenir la granulométrie prévue puis séchage, désagglomération et sélection mettant en oeuvre un sélecteur 24 ailettes de laboratoire.

### Essai n° 10 :

Cet essai illustre l'invention et met en oeuvre comme agent un monoester de phosphate acide de tristyrylphénol contenant 60 moles d'oxyde d'éthylène et comme charge une calcite de diamètre moyen 1,8 micromètres (produit B).

Pour cet essai selon l'invention, il est mis en oeuvre le même procédé de fabrication de la charge traitée selon l'invention que pour l'essai n° 1.

Les résultats sont rassemblés dans le tableau I pour les essais 1 à 4 et 5 à 7 et dans le tableau II pour les essais 8 à 10.

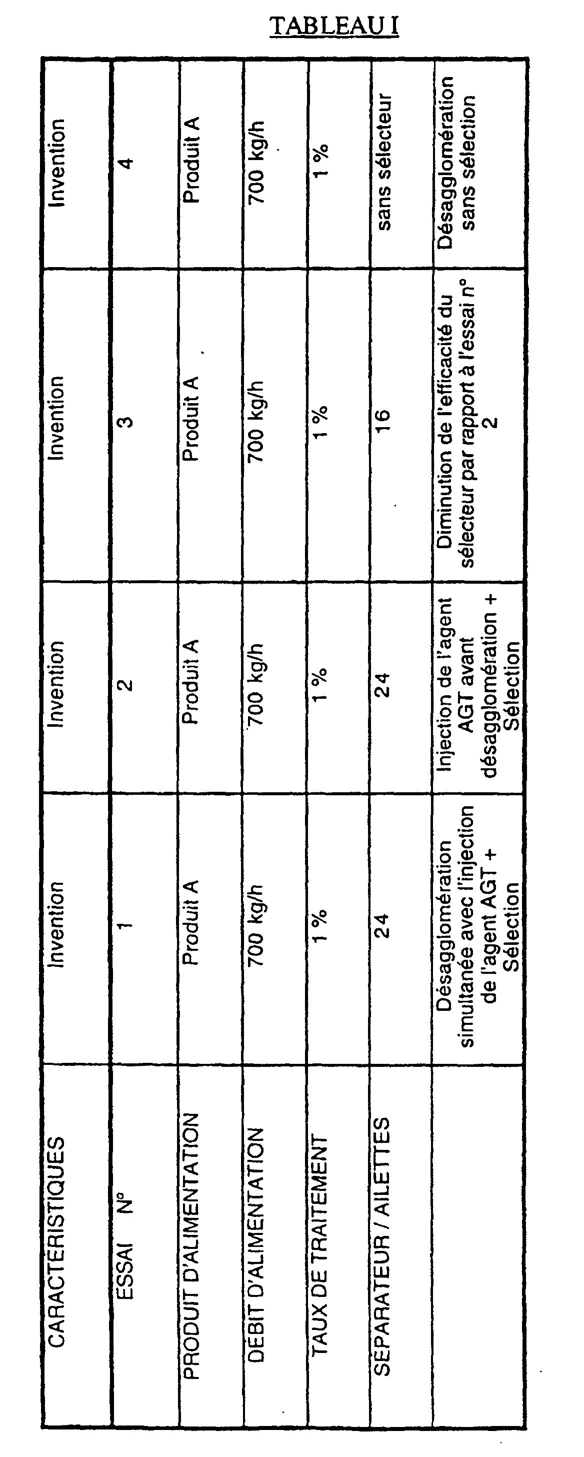

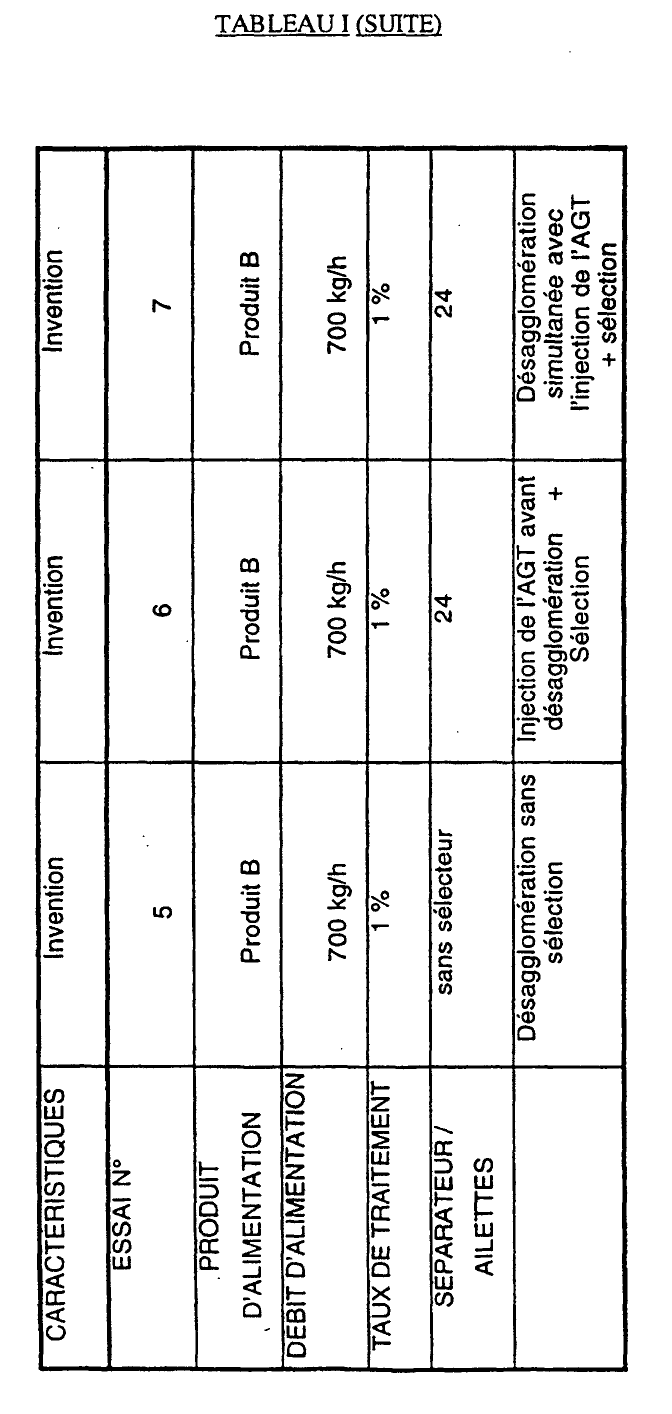

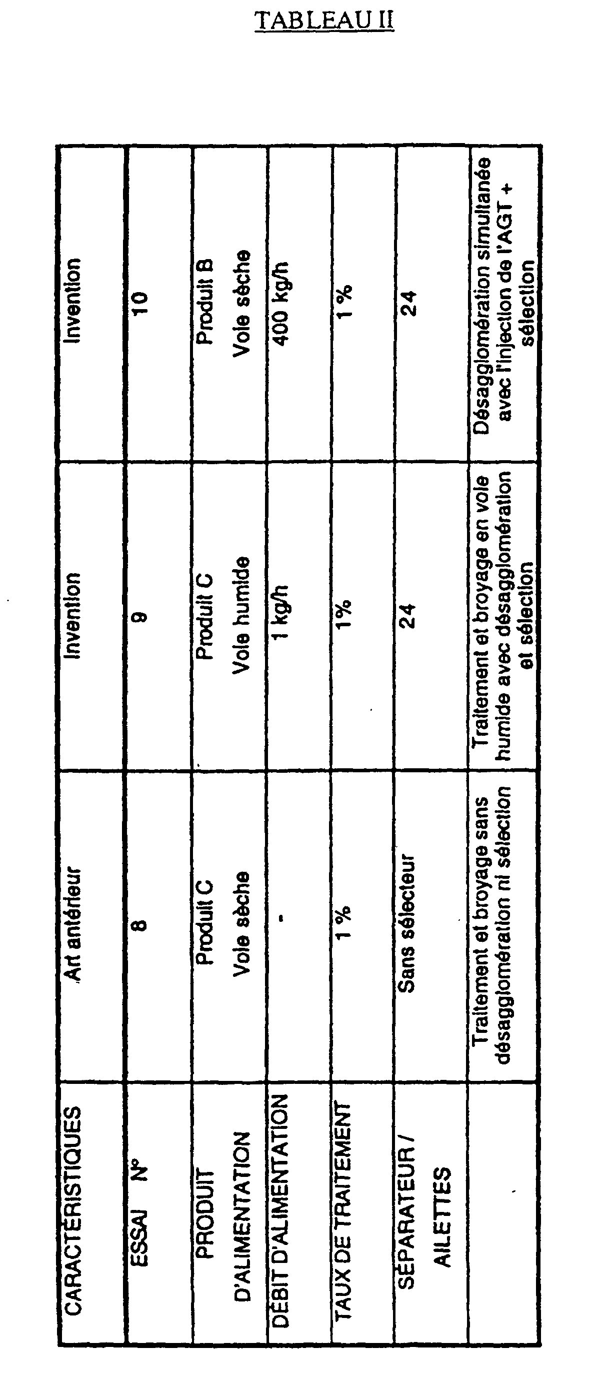

Les charges ainsi traitées, ainsi que d'autres charges, traitées ou non, sont utilisées dans ce qui suit pour des essais de leur mise en dispersion dans un polyol permettant de simuler la rapidité et la facilité de la dispersion de la charge dans ce polyol.

### B. Essais de mise en dispersion dans un polyol:

Pour ce faire, on pèse, dans un récipient métallique d'une hauteur de 105 mm et d'un diamètre de 90 mm, 250 g d'un triol d'indice d'hydroxyle égal à 48 mg/g et de viscosité égale à 750 mPa.s, que l'on met sous agitation, à l'aide d'un agitateur de marque Pendraulik muni d'une pâle défloculeuse de 50 mm de diamètre et d'un régulateur de vitesse. On vérifie la vitesse de rotation de l'axe d'agitation avec un tachymètre (380 ou 690 T/min). On introduit les 25 g de minéral dans le polyol et on déclenche le chronomètre à la fin de l'introduction de la poudre. On fait des prélèvements de 2 ou 3 g de dispersion, à l'aide d'une pipette Pasteur, régulièrement en fonction du temps. On applique l'échantillon sur la jauge de North (0 à 100 µm) et on réalise la mesure comme elle est décrite dans la norme ISO 1524. La valeur de jauge retenue est la valeur de graduation où apparaît le premier point de minéral non dispersé. La jauge de North est nettoyée avec de l'alcool isopropylique et séchée entre chaque essai.

Pour chacun des essais n° 11 à 28, le polyol utilisé est décrit dans les tableaux III-1, III-2 et III-3 ci après dans lesquels les résultats sont rassemblés.

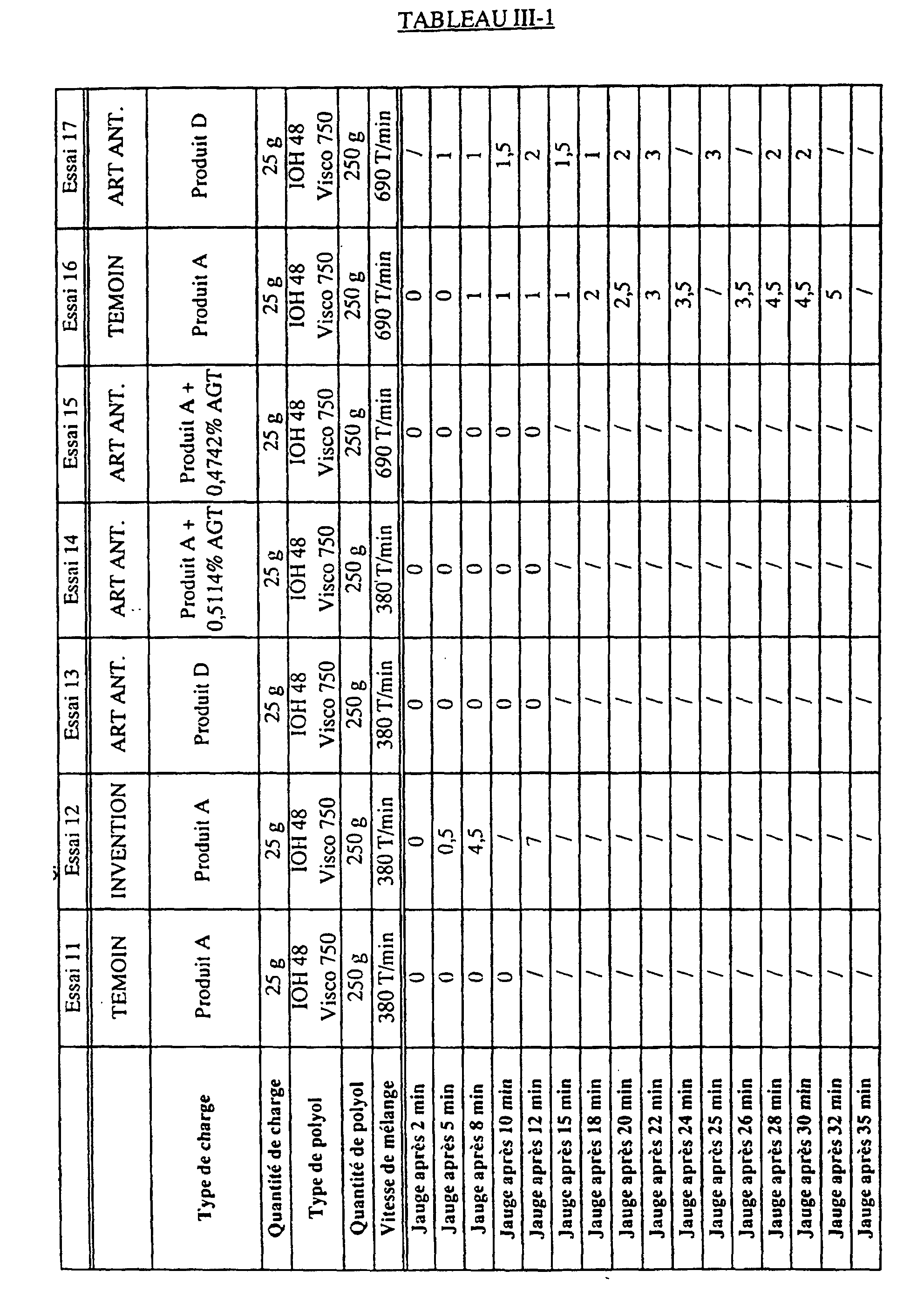

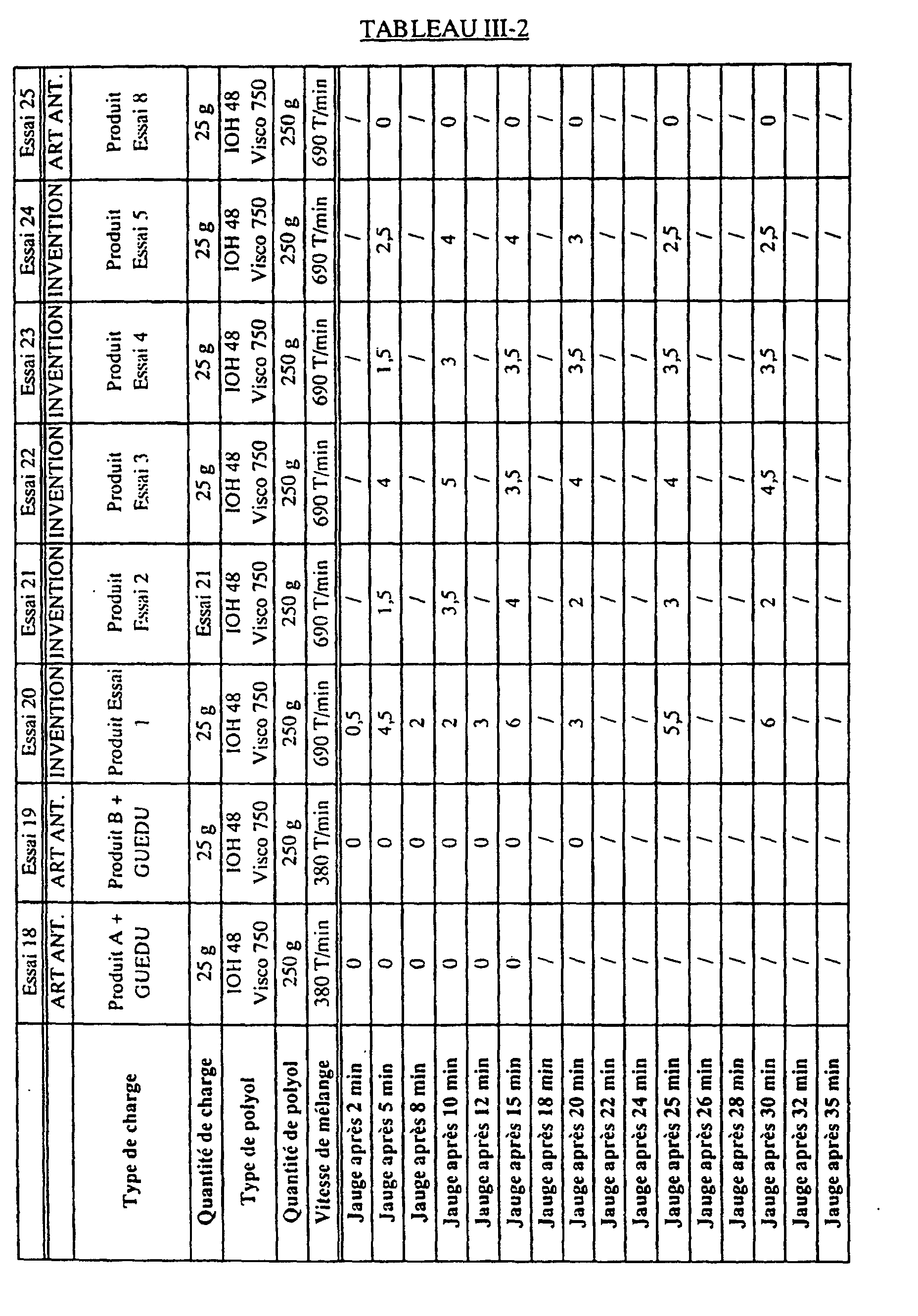

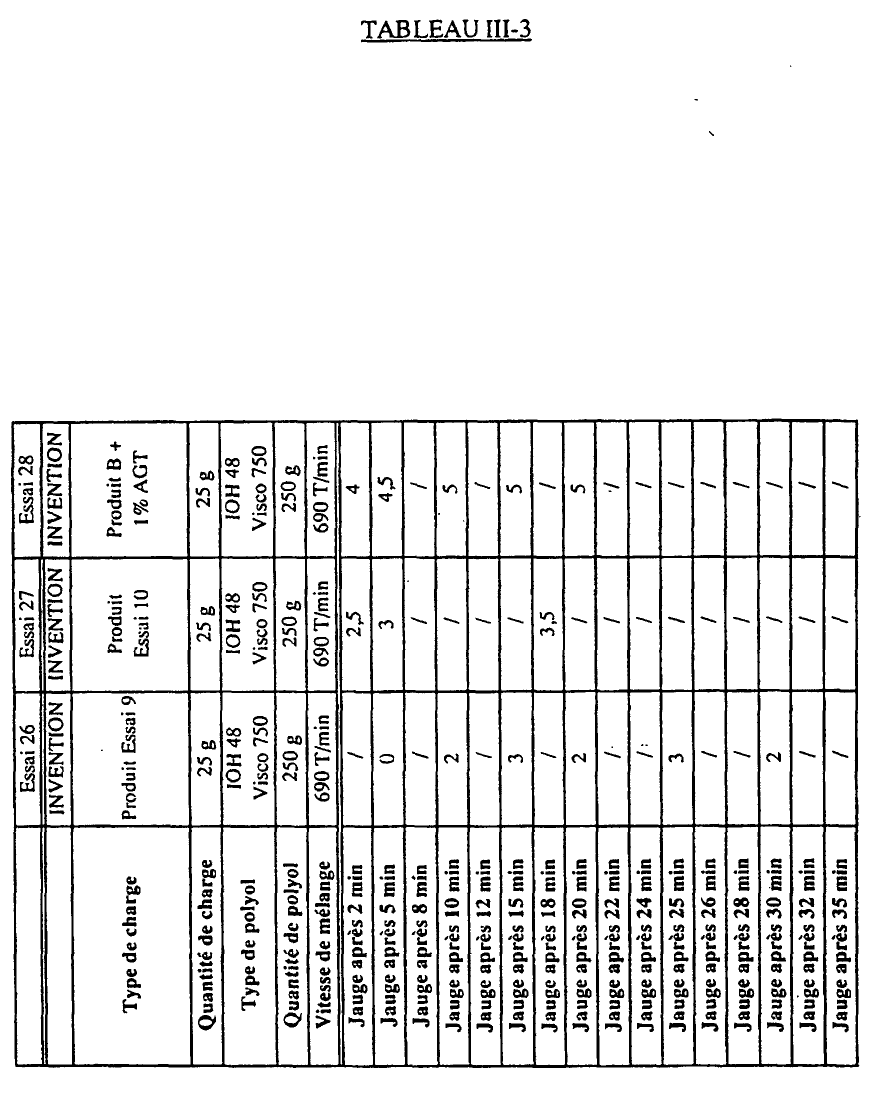

Dans ces tableaux, AGT signifie l'agent selon l'invention de type phosphate, GUEDU le type de mélangeur connu et IOH l'indice d'hydroxyle.

### Essai n° 11:

Cet essai représente la dispersion d'une craie de Champagne de diamètre moyen de 2 micromètres, non traitée, dans le polyol précité.

Il n'y a pas de jauge, donc pas de mélange réalisé qui soit homogène et sans agglomérats.

Le résultat est mauvais; c'est un essai témoin.

### Essai n° 12 :

Cet essai représente un exemple selon l'invention mettant en oeuvre le Produit A de l'essai n° 1. La jauge est de 4,5 après 8 minutes.

Il y a donc un bon mélange après 8 minutes.

### Essai n° 13 :

Cet essai représente l'art antérieur et met en oeuvre une craie de Champagne simplement traitée par de l'acide stéarique de diamètre moyen égal à 2 micromètres et disponible commercialement (Produit D).

Le résultat est mauvais.

### Essai n° 14 :

Cet essai représente l'ajout de l'agent de traitement utilisé dans les essais 1 à 9 non pas pour traiter la charge comme dans les essais n° 1 à 9, mais comme agent dispersant puisqu'il est ajouté dans le mélange charge-polyol.

Le résultat est mauvais et confirme l'importance du traitement effectué selon l'une des étapes de l'invention.

### Essai n° 15 :

Cet essai est identique à l'essai n° 14 à l'exception du taux de l'agent (peu significatif) et de la vitesse d'agitation pour réaliser le mélange (presque le double) afin de fournir une énergie de dispersion plus importante.

Le résultat est également mauvais.

### L'essai n° 16 :

Cet essai est identique au n° 11 à l'exception de la vitesse d'agitation pour faire le mélange (presque doublée) ce qui montre qu'il faut plus de 20 minutes pour avoir un bon mélange (jauge = 3), avec donc beaucoup plus d'énergie mécanique.

### Essai n° 17 :

Cet essai est identique au n° 13 à l'exception de la vitesse d'agitation pour faire le mélange (presque doublée) ce qui montre qu'il faut plus de 20 minutes pour avoir un bon mélange (jauge = 3), avec donc beaucoup plus d'énergie mécanique.

### Essais n° 18 et 19 :

Ces essais utilisent un simple mélangeur type Guedu et donnent de mauvais résultats prouvant que le traitement effectué selon une des étapes de l'invention n'est pas un simple mélange.

### Essai n° 18 :

Cet essai est effectué avec une craie de Champagne non traitée de diamètre moyen de 2 micromètres. Le mélange au mélangeur Guedu met en oeuvre un agent de traitement du type mono- et diester de phosphate de nonylphénol contenant 30 motifs d'oxyde d'éthylène.

### Essai n° 19

Cet essai est effectué avec une calcite non traitée de diamètre moyen 1,8 micromètres. Le mélange au mélangeur Guedu met en oeuvre un agent de traitement du type mono- et diester de phosphate acide d'alcool décylique contenant 5 motifs d'oxyde d'éthylène.

### Essais n° 20 à 23 :

Ces essais mettent respectivement en oeuvre les produits des essais n° 1 à 4 et sont des variations du procédé de l'invention montrant que la désagglomération suffit et que la sélection n'est pas obligatoire.

### Essai n° 24

Cet essai, selon l'invention effectué à partir de calcite au lieu de craie (mise en oeuvre du produit de l'essai n° 5).

Le résultat (jauge = 4 après 10 minutes) peut être considéré comme bon.

### Essai n° 25 :

Cet essai met en oeuvre le produit de l'essai n° 8 de l'art antérieur et indique qu'un broyage au broyeur à boulets sans désagglomération ne donne pas de résultats satisfaisants.

### Essai n°26 :

Cet essai met en oeuvre le produit de l'essai n° 9 et donne des résultats convenables (jauge = 3 après 15 minutes); cet essai démontre donc la possibilité d'effectuer le traitement selon l'invention par voie humide.

### Essai n° 27 :

Cet essai met en oeuvre le produit de l'essai n° 10 et donne des résultats convenables (jauge = 3 après 5 minutes); cet essai exemplifie l'utilisation d'un autre type d'agent selon l'invention.

### Essai n° 28 :

Cet essai met en oeuvre une calcite (produit B) traitée selon le procédé de l'invention de l'essai n° 1, avec l'utilisation de 1 % en poids d'un mélange de mono- et diester de phosphate acide d'alcool cétostéarylique.

Cet essai donne des résultats convenables (jauge = 4 après 2 minutes) ce qui exemplifie l'utilisation d'un autre type d'agent selon l'invention.

### EXEMPLE 2 :

Cet exemple concerne la mise en oeuvre de différentes charges, toutes traitées selon le procédé de l'essai n° 1.

On a utilisé les diverses charges suivantes :
Produit R : marbre de diamètre moyen 8 micromètres.
Produit S : Hydroxyde de magnésium commercial, de diamètre moyen 1,4 - 1,8 micromètres.
Produit T : talc de diamètre moyen 2,5 micromètres.
Produit U : dolomie de diamètre moyen 3 micromètres.
Produit V : hydroxyde d'aluminium de diamètre moyen 0,8 micromètres.
Produit G : kaolin de diamètre moyen 0,50 micromètres.
Produit W : carbonate de calcium précipité de diamètre moyen 0,30 micromètres.

### Essai n° 29 :

Cet essai est un essai témoin qui représente la dispersion d'un kaolin de diamètre moyen 0,50 micromètres, non traité, dans le polyol précité.

Il n'y a pas de jauge, donc pas de mélange réalisé, qui soit homogène et sans agglomérats.

Le résultat est mauvais.

### Essai n° 30 :

Cet essai représente un essai selon l'invention mettant en oeuvre, selon le procédé de l'essai n° 1, un kaolin de diamètre moyen 0,50 micromètres traité avec 1,5 % en poids de l'agent utilisé dans l'essai n° 1.

La jauge est bonne par rapport au témoin.

### Essai n° 31 :

Cet essai est un essai témoin mené avec le produit U. Il n'y a pas de jauge.

### Essai n° 32 :

Cet essai est un essai selon l'invention mené sur le produit U traité, selon le procédé de l'essai n° 1, avec 1,5 % en poids de l'agent utilisé dans l'essai n° 1. La jauge est bonne par rapport au témoin.

### Essai n° 33 :

Cet essai est un essai témoin mené avec le produit W. Il n'y a pas de jauge.

### Essai n° 34 :

Cet essai est un essai selon l'invention mené sur le produit W traité, selon le procédé de l'essai n° 1, avec 2,5 % en poids de l'agent utilisé dans l'essai n° 1. La jauge est bonne par rapport au témoin.

### Essai n° 35 :

Cet essai est un essai témoin mené sur le produit R. Il n'y a pas de jauge.

### Essai n° 36 :

Cet essai est un essai selon l'invention mené sur le produit R traité, selon le procédé de l'essai n° 1, avec 1 % en poids d'un agent qui est un mono- et diester de phosphate acide de nonylphénol contenant 10 moles d'oxyde d'éthylène. La jauge est bonne par rapport au témoin.

### Essai n° 37 :

Cet essai est un essai témoin mené sur un mélange (Produit A + produit T) de diamètre moyen 2,5 micromètres dans un rapport pondéral 50/50. Il n'y a pas de jauge.

### Essai n° 38 :

Cet essai est un essai selon l'invention, mené sur le produit de l'essai n° 37 traité, selon le procédé de l'essai n° 1, avec 0,5 % de l'agent utilisé dans l'essai n° 1. La jauge est bonne par rapport au témoin.

### Essai n° 39 :

Cet essai est un essai témoin mené sur le produit V. Il n'y a pas de jauge.

### Essai n° 40 :

Cet essai est un essai selon l'invention mené sur le produit V traité, selon le procédé de l'essai n° 1, avec 1,2 % de l'agent utilisé dans l'essai n° 1. La jauge est bonne par rapport au témoin.

### Essai n° 41 :

Cet essai est un essai témoin mené sur le produit S. Il n'y a pas de jauge.

### Essai n° 42 :

Cet essai est un essai selon l'invention mené sur le produit S traité, selon le procédé de l'essai n° 1, avec 1,5 % de l'agent utilisé dans l'essai n° 1. La jauge est bonne par rapport au témoin.

Les résultats sont rassemblés dans les tableaux IV-1 et IV-2 ci après.

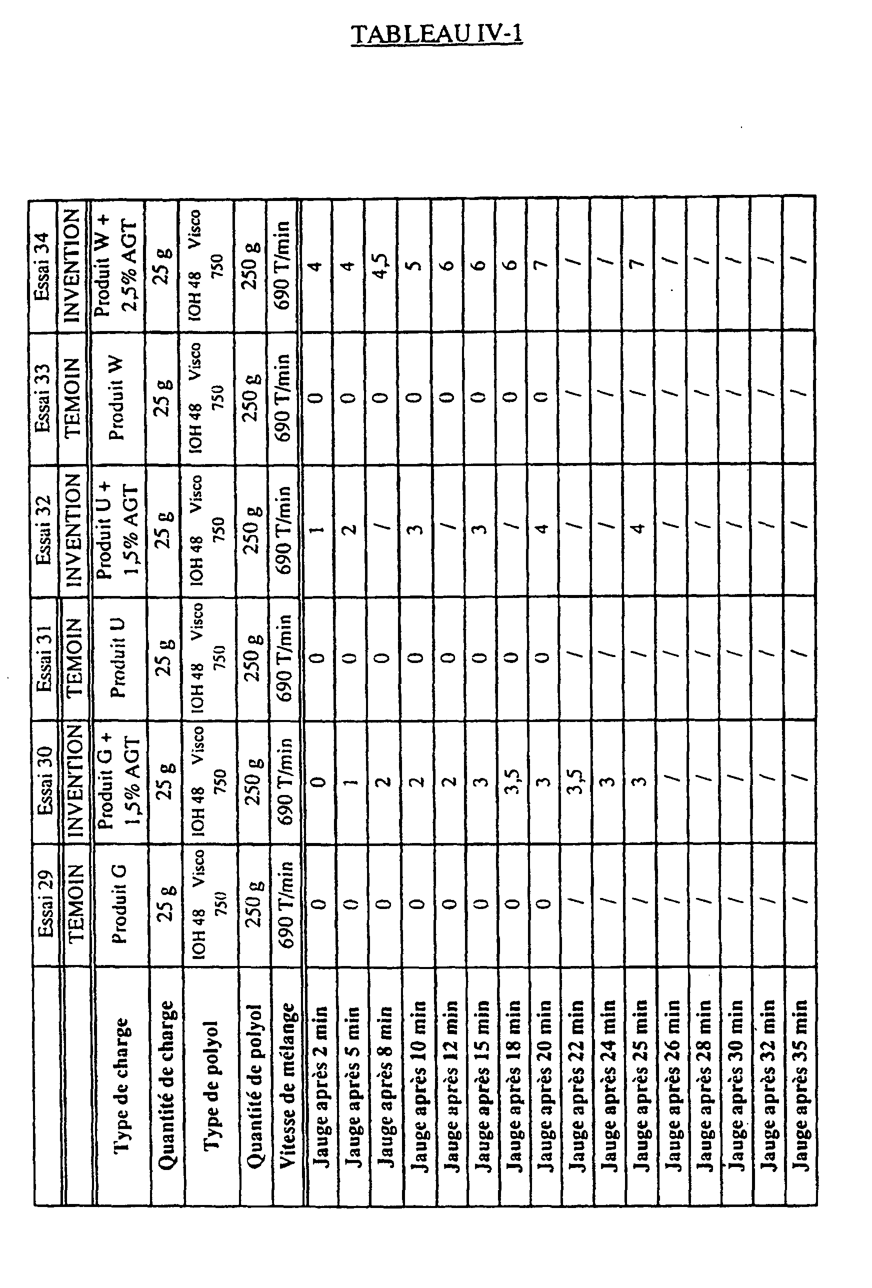

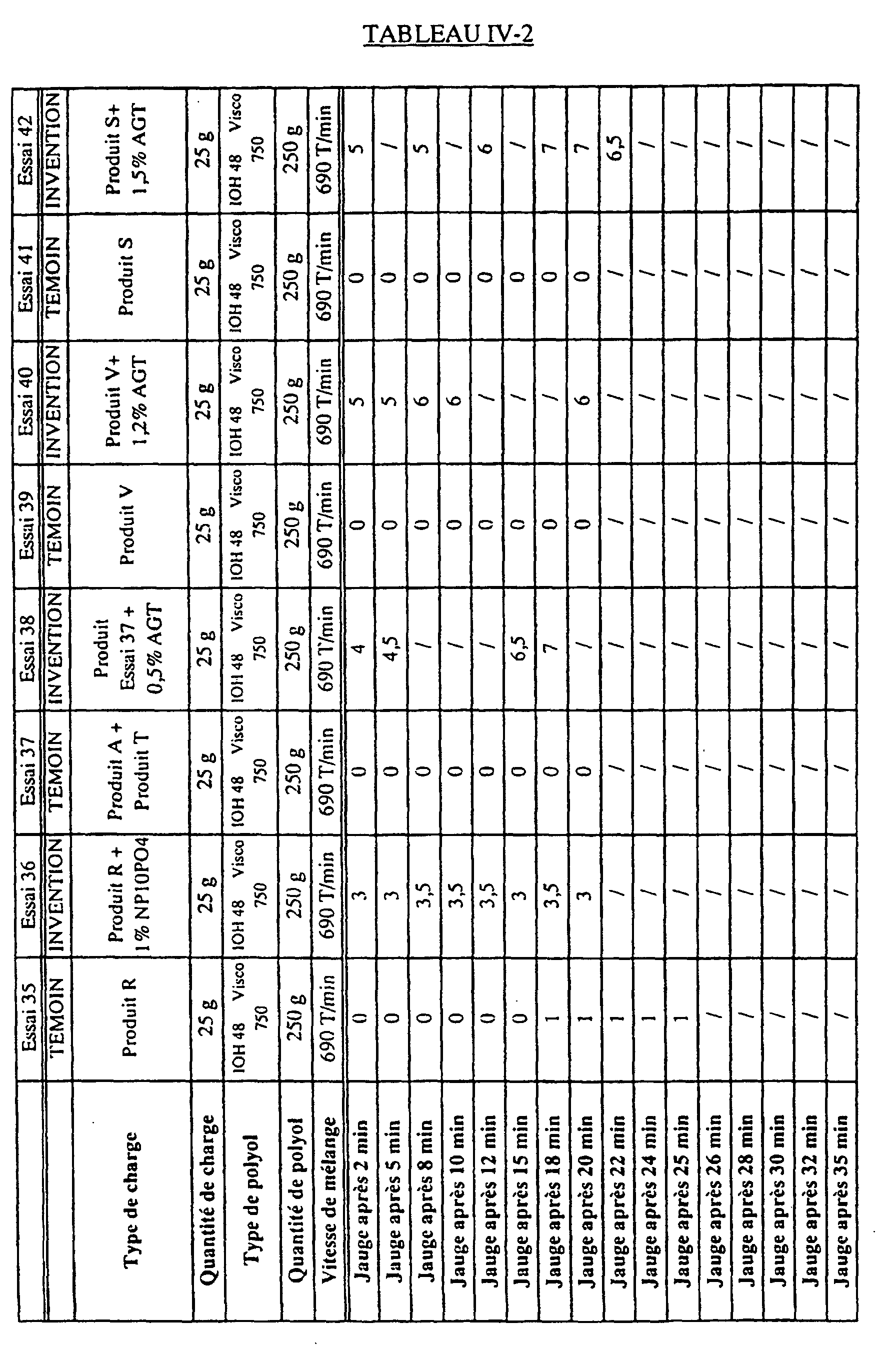

L'examen des Tableaux IV ci-dessus montre que le procédé selon l'invention permet d'obtenir des suspensions de diverses charges minérales dans un polyol, qui sont homogènes et comportent des particules inférieures à 70 micromètres après 15 minutes.

### EXEMPLE 3 :

Cet exemple concerne la fabrication de prémélanges de charges minérales avec un polyol à différents taux de charges.

### Essai n° 43 :

Cet essai illustre l'invention et met en oeuvre comme charge le produit A traité selon l'essai n° 1 et comme polyol, un polyol d'indice d'hydroxyle égal à 48 mg/g et de viscosité égale à 700 mPa.s à 20°C, dans un rapport massique 60 % polyol - 40 % carbonate de calcium.

### Essai n° 44 :

Cet essai illustre l'invention et met en oeuvre comme charge le produit A traité selon l'essai n° 1 et comme polyol, un polyol d'indice d'hydroxyle égal à 48 mg/g et de viscosité égale à 700 mPa.s à 20°C, dans un rapport massique 50 % polyol - 50 % carbonate de calcium.

### Essai n° 45 :

Cet essai illustre l'invention et met en oeuvre comme charge le produit A traité selon l'essai n° 1 et comme polyol, un polyol d'indice d'hydroxyle égal à 48 mg/g et de viscosité égale à 700 mPa.s à 20°C, dans un rapport massique 40 % polyol - 60 % carbonate de calcium.

### Essai n° 46 :

Cet essai illustre l'invention et met en oeuvre comme charge le produit A traité selon l'essai n° 1 et comme polyol, un polyol d'indice d'hydroxyle égal à 48 mg/g et de viscosité égale à 700 mPa.s à 20°C, dans un rapport massique 90 % polyol - 10 % carbonate de calcium.

### Essai n° 47 :

Cet essai illustre l'invention et met en oeuvre comme charge le kaolin traité de l'essai n° 30 et comme polyol, un polyol d'indice d'hydroxyle égal à 56 mg/g et de viscosité égale à 300 mPa.s à 25°C, dans un rapport massique 50 % polyol - 50 % kaolin.

Les résultats sont consignés dans le Tableau V suivant.

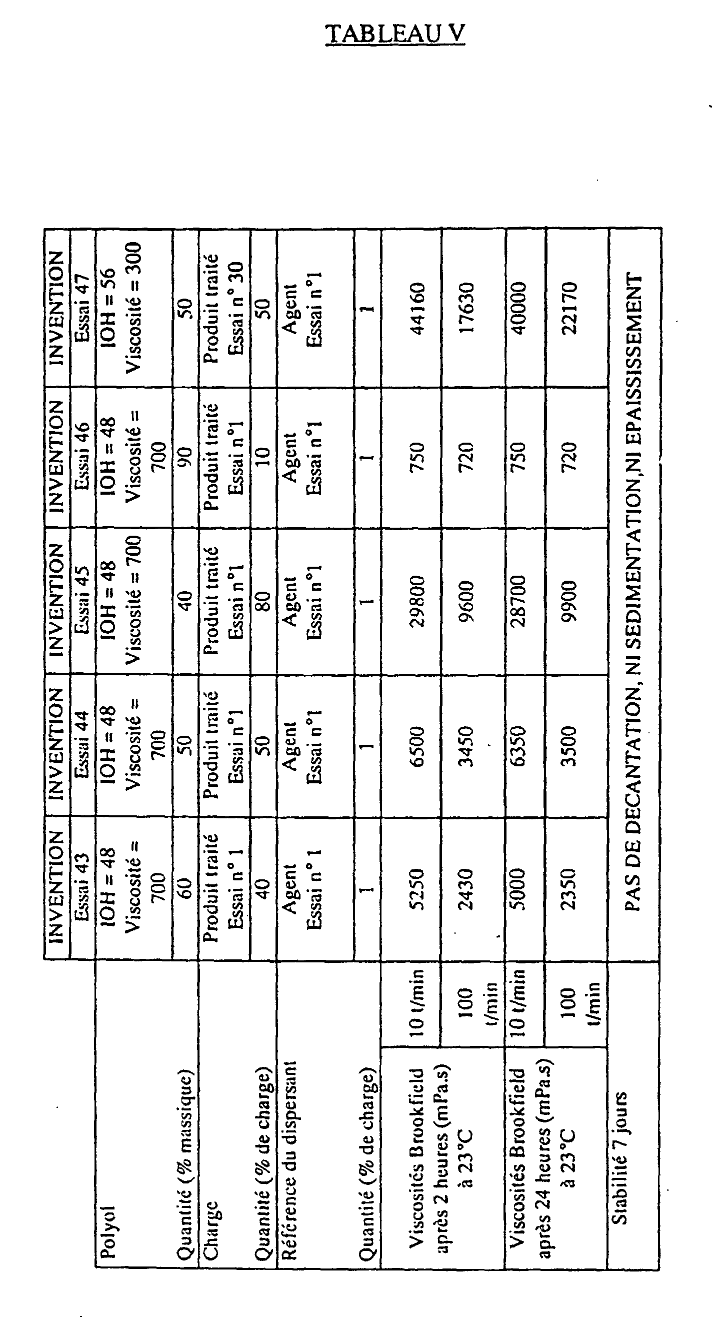

L'examen de ce Tableau V montre qu'il est possible d'obtenir des suspensions dans les polyols de charges minérales qui ne sont soumises ni à décantation, ni à sédimentation, ni à un épaississement rédhibitoires

### EXEMPLE 4

Cet exemple illustre l'obtention de mousse PUR contenant les charges traitées selon l'invention.

On procède à la fabrication, selon un procédé bien connu, de mousse PUR, en utilisant un prémélange de charge traitée de l'exemple 3 (essai n° 44 à 50 % de carbonate de calcium) à différentes masses volumiques de mousse PUR et différents taux de charge selon l'invention.

### Essai n° 48 :

Pour cet essai, la masse volumique attendue est 25 kg/m³, le taux de charge est 10 parts par rapport au polyol.

### Essai n° 49 :

Pour cet essai, la masse volumique attendue est 35 kg/m³, le taux de charge est 20 parts par rapport au polyol.

### Essai n° 50 :

Pour cet essai, la masse volumique attendue est 40 kg/m³, le taux de charge est 5 parts par rapport au polyol.

Les résultats sont rassemblés dans le Tableau VI suivant.

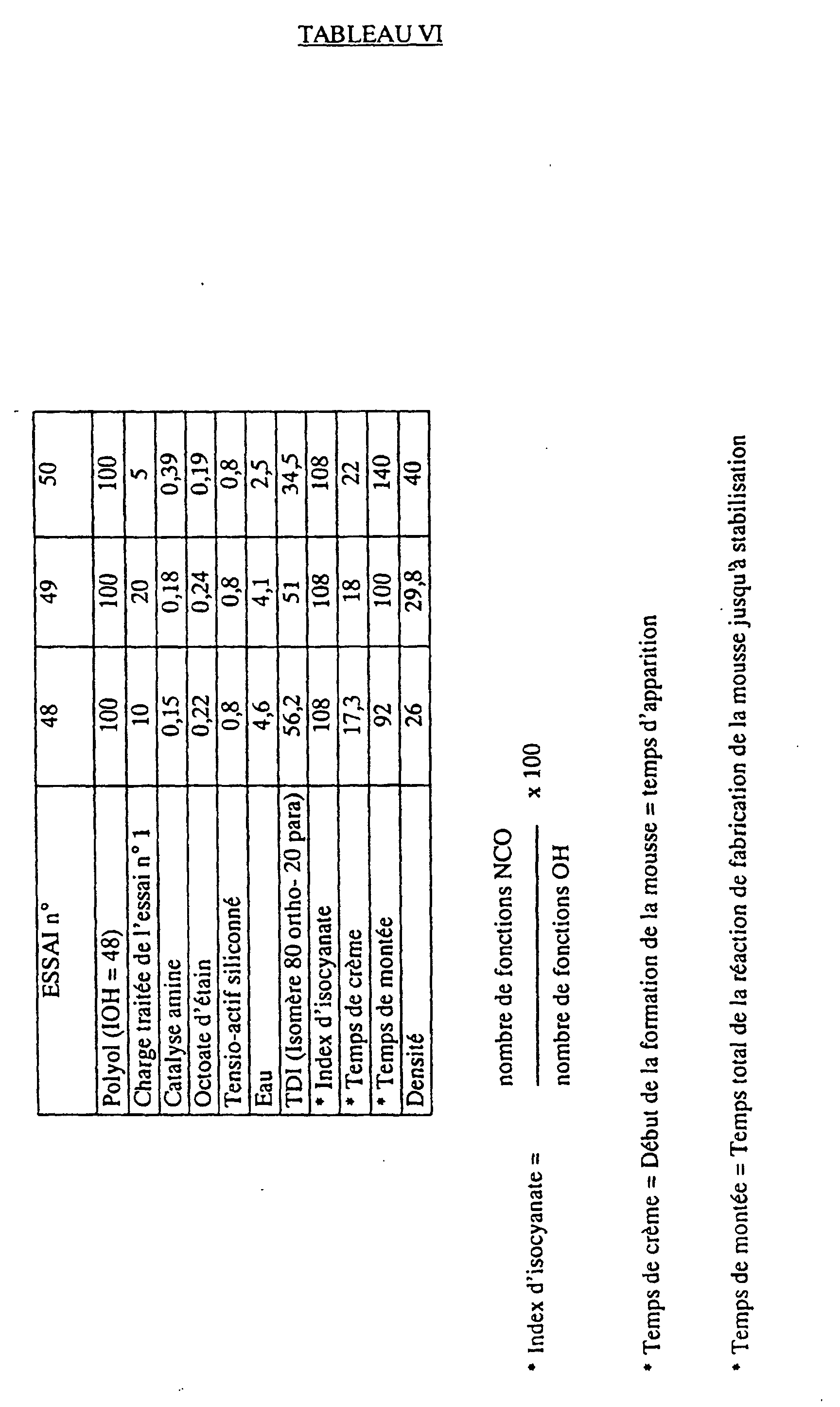

L'examen de ce Tableau VI montre qu'il est possible d'obtenir des mousses PUR par un procédé intégrant le perfectionnement de la présente invention.

## Revendications

1. Procédé de traitement de charges minérales destinées à la fabrication de mousses de PUR ou de composites PUR **caractérisé en ce que** ladite charge
a) est traitée par au moins un agent de traitement, de formule générale (1) : 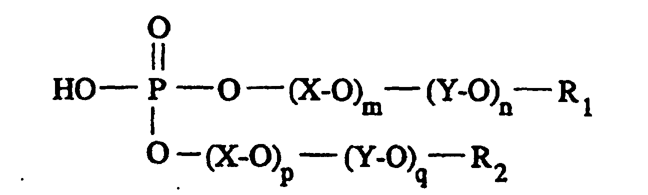
avec R₁ = soit H soit alkyle en C₈ à C₄₀ soit aryle ou alkylaryle ou arylalkyle en C₆ à C₄₀
avec R₂ = soit alkyle en C₈ à C₄₀ soit aryle ou alkylaryle ou arylalkyle en C₆ à C₄₀
X = -CH₂-CH₂- ou -CH(CH₃)-CH₂-
ou -CH₂-CH(CH₃)- ou -(CH₂)₅-CO-
Y = -CH₂-CH₂- ou -CH(CH₃)-CH₂-
ou -CH₂-CH(CH₃)- ou -(CH₂)₅-CO-
X et Y étant identiques ou différents,
(m + n) varie de 0 à 60 ( bornes comprises) ainsi que (p+q)
avec 0 ≤ m + n ≤ 60 et 0 ≤ p+q ≤ 60 lorsque X = Y = -CH₂-CH₂-
et
avec (1 ≤ m ≤ 10 et 1 ≤ p ≤10) et (0 ≤ n ≤ 59 et 0 ≤ q ≤ 59) lorsque X est différent de Y
b) subit une étape de désagglomération et
c) subit éventuellement une étape de sélection.

2. Procédé de traitement de charges minérales selon la revendication 1, **caractérisé en ce que** ledit agent de traitement est un phosphate acide d'alcool aliphatique ramifié ou non en C8 à C20 sur lequel est condensé de 0 à 12 motifs d'oxyde d'éthylène, et comprenant éventuellement un mélange de mono et diesters.

3. Procédé de traitement de charges minérales selon la revendication 1 ou 2 **caractérisé en ce que** ledit agent de traitement est un mélange de mono- et diester de phosphate acide d'alcool décylique avec 5 moles d'oxyde d'éthylène.

4. Procédé de traitement de charges minérales selon la revendication 1, **caractérisé en ce que** ledit agent de traitement est le monoester de phosphate acide de tristyrylphénol contenant 60 moles d'oxyde d'éthylène

5. Procédé de traitement de charges minérales selon la revendication 1 ou 2, **caractérisé en ce que** ledit agent de traitement est un mélange de mono- et diester de phosphate acide d'alcool cétostéarylique.

6. Procédé de traitement de charges minérales selon la revendication 1 ou 2, **caractérisé en ce que** ledit agent de traitement est un mélange de mono- et diester de phosphate acide de nonylphénol contenant 10 moles d'oxyde d'éthylène.

7. Procédé de traitement de charges minérales selon la revendication 1, **caractérisé en ce que** ledit traitement est effectué par voie sèche ou par voie humide.

8. Procédé de traitement de charges minérales selon l'une quelconque des revendications 1 à 7, **caractérisé en ce que** ladite charge est choisie parmi : les carbonates, phosphates et sulfates d'alcalino-terreux naturels ou synthétiques, le carbonate de zinc, les sels mixtes de magnésium et de calcium tels que les dolomies, la chaux, la magnésie, le sulfate de baryum, les sulfates de calcium, les hydroxydes de magnésium, d'aluminium, la silice, la wollastonite, les argiles et autres silico-alumineux tels que les kaolins, les silico-magnésiens tels que le talc, le mica, les billes de verre pleines ou creuses, les oxydes métalliques tels que l'oxyde de zinc, les oxydes de fer, l'oxyde de titane et leurs mélanges.

9. Procédé de traitement de charges minérales selon l'une quelconque des revendications 1 à 7, **caractérisé en ce que** ladite charge est choisie parmi: les carbonates de calcium naturels choisis parmi la craie, la calcite et le marbre, le carbonate de calcium précipité, la dolomie, les hydroxydes d'aluminium ou de magnésium, le kaolin, le talc, la wollastonite et leurs mélanges.

10. Charge minérale traitée, de granulométrie particulière, pour la fabrication de mousses de polyuréthannes, par un procédé selon lequel ladite charge est mélangée avec au moins un partie du polyol de la réaction formant le polyuréthanne, et présentant un temps de mélange plus court avec le polyol et les autres réactifs, **caractérisée en ce qu'**elle
a) est traitée par au moins un composé de formule générale (1) : 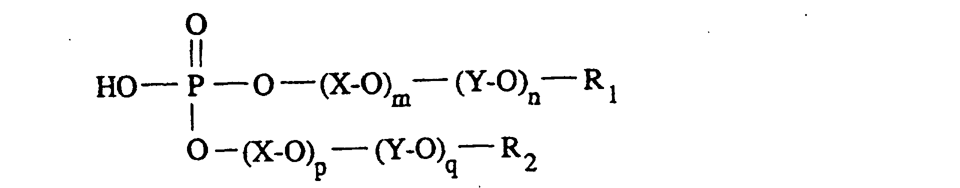
avec R₁ = soit H soit alkyle en C₈ à C₄₀ soit aryle ou alkylaryle ou arylalkyle en C₆ à C₄₀
avec R₂ = soit alkyle en C₈ à C₄₀ soit aryle ou alkylaryle ou arylalkyle en C₆ à C₄₀
X= -CH₂-CH₂- ou -CH(CH₃)-CH₂-
ou -CH₂-CH(CH₃)- ou -(CH₂)₅-CO-
Y = -CH₂-CH₂- ou -CH(CH₃)-CH₂-
ou -CH₂-CH(CH₃)- ou -(CH₂)₅-CO-
X et Y étant identiques ou différents,
(m + n) varie de 0 à 60 ( bornes comprises) ainsi que (p+q)
avec 0 ≤ m + n ≤ 60 et 0 ≤ p + q ≤ 60 lorsque X = Y = -CH₂-CH₂-
et
avec (1 ≤ m ≤ 10 et 1 ≤ p ≤ 10) et (0 ≤ n ≤ 59 et 0 ≤ q ≤ 59) lorsque X est différent de Y
b) subit une étape de désagglomération et
c) subit éventuellement une étape de sélection.

11. Charge minérale traitée, selon la revendication 10, **caractérisée en ce que** ledit agent de traitement est un mélange de mono- et diester de phosphate acide d'alcool décylique avec 5 moles d'oxyde d'éthylène.

12. Charge minérale traitée, selon la revendication 10, **caractérisée en ce que** ledit agent de traitement est le monoester de phosphate acide de tristyrylphénol contenant 60 moles d'oxyde d'éthylène.

13. Charge minérale traitée, selon la revendication 10, **caractérisée en ce que** ledit agent de traitement est un mélange de mono- et diester de phosphate acide d'alcool cétostéarylique.

14. Charge minérale traitée, selon la revendication 10, **caractérisée en ce que** ledit agent de traitement est un mélange de mono- et diester de phosphate acide de nonylphénol contenant 10 moles d'oxyde d'éthylène.

15. Charges minérales selon l'une quelconque des revendications 10 à 14, **caractérisées en ce qu'**elles consistent en carbonates, phosphates et sulfates d'alcalino-terreux naturels ou synthétiques, le carbonate de zinc, les sels mixtes de magnésium et de calcium tels que les dolomies, la chaux, la magnésie, le sulfate de baryum, les sulfates de calcium, les hydroxydes de magnésium, d'aluminium, la silice, la wollastonite, les argiles et autres silico-alumineux tels que les kaolins, les silico-magnésiens tels que le talc, le mica, les billes de verre pleines ou creuses, les oxydes métalliques tels que l'oxyde de zinc, les oxydes de fer, l'oxyde de titane et leurs mélanges.

16. Charges minérales selon l'une quelconque des revendications 10 à 14, **caractérisées en ce qu'**elles consistent en carbonates de calcium naturels choisis parmi la craie, la calcite et le marbre, le carbonate de calcium précipité, la dolomie, les hydroxydes d'aluminium ou de magnésium, le kaolin, le talc, la wollastonite et leurs mélanges.

17. Charges minérales selon l'une quelconque des revendications 10 à 16, **caractérisées en ce qu'**elles consistent en des produits de diamètre moyen compris entre 0,1 et 15 micromètres, préférentiellement entre 0,1 et 10 micromètres.

18. Charges minérales selon l'une quelconque des revendications 10 à 16, **caractérisées en ce qu'**elles consistent en des produits de diamètre moyen compris entre 0,3 et 8 micromètres

19. Charges minérales selon l'une quelconque des revendications 10 à 18, **caractérisées en ce qu'**elles sont choisies parmi les suivantes: un marbre de diamètre moyen 8 micromètres, un hydroxyde de magnésium de diamètre moyen compris entre 1,4 et 1,8 micromètres, un talc de diamètre moyen 2,5 micromètres, une dolomie de diamètre moyen 3 micromètres, un hydroxyde d'aluminium de diamètre moyen 0,8 micromètres, un kaolin de diamètre moyen 0,5 micromètres, un carbonate de calcium précipité de diamètre moyen 0,30 micromètres.

20. Charges minérales selon l'une quelconque des revendications 10 à 19, **caractérisées en ce qu'**elles conservent leur hydrophilie tout en ayant une prise de polyol diminuée d'au moins 15 % et préférentiellement d'au moins 20 % par rapport à la charge minérale non traitée.

21. Suspensions dans les polyols de charges minérales, **caractérisées en ce que** la charge est une charge selon l'une quelconque des revendications 10 à 20.

22. Suspensions dans les polyols de charges minérales, selon la revendication 21, **caractérisées en ce que** les polyols utilisés appartiennent aux familles des polyéthers et des polyesters-polyéthers, et des polyesters, notamment, parmi les polyéthers polyols, les produits d'addition d'oxyde de propylène sur un polyol simple tel que le glycol, le glycérol, le triméthylolpropane, le sorbitol, en présence ou non d'oxyde d'éthylène ou des polyéthers polyols spéciaux tels que des polyéthers à base aminés, obtenus par addition d'oxyde de propylène ou éventuellement d'oxyde d'éthylène sur des amines, des polyéthers halogénés, des polyéthers greffés résultant de la copolymérisation de styrène et d'acrylonitrile en suspension dans un polyéther, ou encore le polytétraméthylèneglycol, notamment, parmi les polyesters polyols, ceux résultant de la polycondensation de polyalcools sur des polyacides ou leurs anhydrides tels que des diacides, tels que acide adipique, phtalique ou autres, réagissant avec des diols tels que l'éthylène glycol, le propylène glycol, le butylène glycol ou autres, des triols tels que le glycérol, le triméthylolpropane
ou autres et de tétrols tels que le pentaérythritol ou autres, seuls ou en mélange
ou divers composés hydroxylés tels que les polybutadiènes hydroxylés, les prépolymères à terminaisons hydroxyles résultant de la réaction d'un excès de polyol sur un diisocyanate ou encore les polyols simples tels que glycérol, aminoalcools mis en oeuvre en petite quantité avec les polyéthers polyols ou les polyesters polyols.

23. Suspensions dans les polyols de charges minérales, selon la revendication 21 ou 22, **caractérisées en ce qu'**elles contiennent d'autres produits minéraux et/ou organiques tels que catalyseurs et/ou anti-oxydants et/ou autres.

24. Suspensions dans les polyols de charges minérales, selon l'une quelconque des revendications 21 à 23, **caractérisées en ce que** la concentration en matière sèche des matériaux minéraux traités peut atteindre 80 % en poids, et **en ce qu'**elles ne sont soumises ni à décantation, ni à sédimentation, ni à un épaississement rédhibitoires après un stockage au repos de 7 jours pour la fabrication de mousses polyuréthannes souples, semi-rigides ou rigides c'est-à-dire ont une viscosité apparente Brookfield stable et inférieure à celle des suspensions des charges minérales non traitées et **en ce qu'**elles contiennent 0,5 % à 3 % en poids par rapport au poids de la charge minérale d'au moins un agent de traitement de formule générale (1).

25. Prémélanges de charges minérales avec un polyol, et notamment dans les proportions adaptées à la fabrication des polyuréthannes, et plus particulièrement des mousses de polyuréthannes soit par moussage sans agent auxiliaire de gonflement, soit par moussage avec un agent auxiliaire de gonflement comme le chlorure de méthylène, l'acétone ou le CO₂ ou autres, ou de polyuréthannes composites, **caractérisés en ce que** les charges sont prétraitées par un procédé selon l'une quelconque des revendications 1 à 9.

26. Prémélanges de charges minérales avec un polyol selon la revendication 25, **caractérisés en ce que** la charge consiste en une charge telle que décrite dans l'une quelconque des revendications 15 à 19, notamment carbonates de calcium naturels choisis parmi la craie, la calcite et le marbre, le carbonate de calcium précipité, la dolomie, les hydroxydes d'aluminium ou de magnésium, le kaolin, le talc, la wollastonite et leurs mélanges.

27. Utilisations des prémélanges de charge minérale et de polyol selon la revendication 25 ou 26 dans la fabrication de mousses polyuréthannes souples, semi-rigides ou rigides, par le procédé soit par moussage sans agent auxiliaire de gonflement, soit par moussage avec un agent auxiliaire de gonflement comme le chlorure de méthylène, l'acétone ou le CO₂ ou autres, et pour la fabrication de polyuréthannes composites.

28. Utilisations des prémélanges de charge minérale et de polyol selon la revendication 25 ou 26 dans la fabrication de matériaux composites à matrice de polyuréthanne, cellulaire ou non tels que des polyuréthannes renforcés avec des fibres végétales ou de verre ou de quartz ou des fibres synthétiques, en général des fibres coupées, ou analogues, notamment dans le domaine des pièces pour l'industrie automobile, pour le secteur du transport, notamment routier ou ferroviaire, et des pièces industrielles d'applications diverses.

29. Mousses de polyuréthannes souples, semi-rigides ou rigides, obtenues par le procédé soit par moussage sans agent auxiliaire de gonflement, soit par moussage avec un agent auxiliaire de gonflement comme le chlorure de méthylène, l'acétone ou le CO₂ ou autres, **caractérisées en ce qu'**elles incorporent une charge prétraitée selon l'une quelconque des revendications 10 à 20.

30. Polyuréthannes composites cellulaires ou non, **caractérisés en ce qu'**ils incorporent une charge prétraitée selon l'une quelconque des revendications 10 à 20.

31. Objets moulés ou non **caractérisés en ce qu'**ils sont obtenus à partir des mousses et des polyuréthannes composites obtenus selon la revendication 29 ou 30.

## Patentansprüche

1. Verfahren zur Behandlung von Mineralfüllstoffen, die zur Herstellung von PUR-Schäumen oder von PUR-Verbundstoffen vorgesehen sind, **dadurch gekennzeichnet, dass** der Füllstoff
a) mit mindestens einem Behandlungsmittel der allgemeinen Formel (1) behandelt wird: 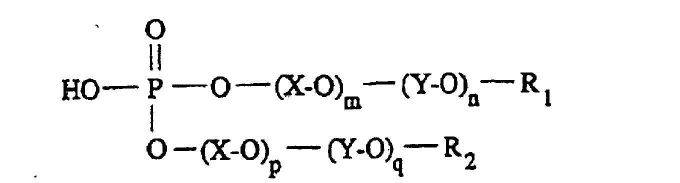
wobei R₁ entweder ein Wasserstoffatom oder einen Alkylrest mit 8 bis 40 Kohlenstoffatomen oder einen Aryl- oder Alkylaryl- oder Arylalkylrest mit 6 bis 40 Kohlenstoffatomen bedeutet,
wobei R₂ entweder einen Alkylrest mit 8 bis 40 Kohlenstoffatomen oder einen Aryl- oder Alkylaryl- oder Arylalkylrest mit 6 bis 40 Kohlenstoffatomen bedeutet,
X eine Gruppe -CH₂-CH₂- oder -CH(CH₃)-CH₂- oder -CH₂-CH(CH₃)- oder -(CH₂)₅-CO- bedeutet,
Y eine Gruppe -CH₂-CH₂- oder -CH(CH₃)-CH₂- oder -CH₂-CH(CH₃)- oder -(CH₂)₅-CO- bedeutet,
X und Y gleich oder verschieden sind,
(m + n) von 0 bis 60 variiert (Grenzen eingeschlossen), ebenso wie (p + q),
wobei 0 ≤ m + n ≤ 60 und 0 ≤ p + q ≤ 60 ist, wenn X = Y = -CH₂-CH₂- ist und
wobei (1 ≤ m ≤ 10 und 1 ≤ p ≤ 10) und (0 ≤ n ≤ 59 und 0 ≤ q ≤ 59) ist, wenn X von Y verschieden ist,
b) einem Desagglomerationsschritt unterzogen wird und
c) gegebenenfalls einem Selektionsschritt unterzogen wird.

2. Verfahren zur Behandlung von Mineralfüllstoffen gemäß Anspruch 1, **dadurch gekennzeichnet, dass** das Behandlungsmittel ein saures Phosphat eines aliphatischen verzweigten oder unverzweigten Alkohols mit 8 bis 20 Kohlenstoffatomen, an denen 0 bis 12 Ethylenoxideinheiten kondensiert sind, ist und gegebenenfalls ein Gemisch von Mono- und Diestern umfasst.

3. Verfahren zur Behandlung von Mineralfüllstoffen gemäß Anspruch 1 oder 2, **dadurch gekennzeichnet, dass** das Behandlungsmittel ein Gemisch des Mono- und Diesters des sauren Phosphats von Decylalkohol mit 5 mol Ethylenoxid ist.

4. Verfahren zur Behandlung von Mineralfüllstoffen gemäß Anspruch 1, **dadurch gekennzeichnet, dass** das Behandlungsmittel der Monoester des sauren Phosphats von Tristyrylphenol, enthaltend 60 mol Ethylenoxid, ist.

5. Verfahren zur Behandlung von Mineralfüllstoffen gemäß Anspruch 1 oder 2, **dadurch gekennzeichnet, dass** das Behandlungsmittel ein Gemisch des Mono- und Diesters des sauren Phosphats von Cetostearylalkohol ist.

6. Verfahren zur Behandlung von Mineralfüllstoffen gemäß Anspruch 1 oder 2, **dadurch gekennzeichnet, dass** das Behandlungsmittel ein Gemisch des Mono- und Diesters des sauren Phosphats von Nonylphenol, enthaltend 10 mol Ethylenoxid, ist.

7. Verfahren zur Behandlung von Mineralfüllstoffen gemäß Anspruch 1, **dadurch gekennzeichnet, dass** die Behandlung auf trockenem Wege oder auf feuchtem Wege durchgeführt wird.

8. Verfahren zur Behandlung von Mineralfüllstoffen gemäß einem der Ansprüche 1 bis 7, **dadurch gekennzeichnet, dass** der Füllstoff aus natürlichen oder synthetischen Erdalkalicarbonaten, -phosphaten und -sulfaten, Zinkcarbonat, gemischten Magnesium- und Calciumsalzen wie Dolomiten, Kalk, Magnesiumdioxid, Bariumsulfat, Calciumsulfaten, Hydroxiden des Magnesiums, des Aluminiums, Siliciumdioxid, Wollastonit, Tonen und anderen Aluminiumsilicaten wie Kaolinen, Magnesiumsilicaten wie Talk, Glimmer, massiven und hohlen Glaskugeln, Metalloxiden wie Zinkoxid, Eisenoxiden, Titandioxid und ihren Gemischen ausgewählt ist.

9. Verfahren zur Behandlung von Mineralfüllstoffen gemäß einem der Ansprüche 1 bis 7, **dadurch gekennzeichnet, dass** der Füllstoff aus natürlichem Calciumcarbonaten, ausgewählt aus Kreide, Calcit und Marmor, gefälltem Calciumcarbonat, Dolomit, Hydroxiden des Aluminiums oder des Magnesiums, Kaolin, Talk, Wollastonit und ihren Gemischen ausgewählt ist.

10. Behandelter Mineralfüllstoff einer spezifischen Korngrößenverteilung zur Herstellung von Polyurethanschäumen durch ein Verfahren, gemäß dem der Füllstoff mit mindestens einem Teil des Polyols der das Polyurethan bildenden Reaktion gemischt wird, und der eine kürzere Mischzeit mit dem Polyol und den anderen Reagenzien aufweist, **dadurch gekennzeichnet, dass** er
a) mit mindestens einer Verbindung der allgemeinen Formel (1) behandelt wird: 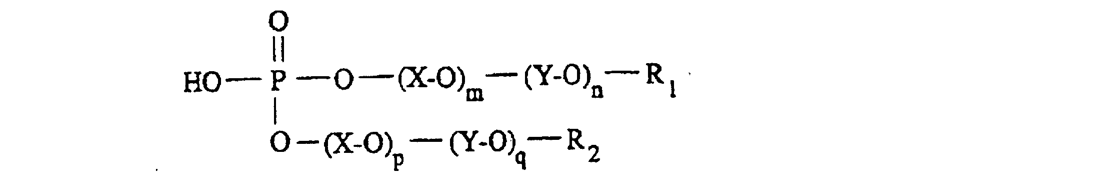
wobei R₁ entweder ein Wasserstoffatom oder einen Alkylrest mit 8 bis 40 Kohlenstoffatomen oder einen Aryl- oder Alkylaryl- oder Arylalkylrest mit 6 bis 40 Kohlenstoffatomen bedeutet,
wobei R₂ entweder einen Alkylrest mit 8 bis 40 Kohlenstoffatomen oder einen Aryl- oder Alkylaryl- oder Arylalkylrest mit 6 bis 40 Kohlenstoffatomen bedeutet,
X eine Gruppe -CH₂-CH₂- oder -CH(CH₃)-CH₂- oder -CH₂-CH(CH₃)- oder -(CH₂)₅-CO- bedeutet,
Y eine Gruppe -CH₂-CH₂- oder -CH(CH₃)-CH₂- oder -CH₂-CH(CH₃)- oder -(CH₂)₅-CO- bedeutet,
X und Y gleich oder verschieden sind,
(m + n) von 0 bis 60 variiert (Grenzen eingeschlossen), ebenso wie (p + q),
wobei 0 ≤ m + n ≤ 60 und 0 ≤ p + q ≤ 60 ist, wenn X = Y = -CH₂-CH₂- ist und
wobei (1 ≤ m ≤ 10 und 1 ≤ p ≤ 10) und (0 ≤ n ≤ 59 und 0 ≤ q ≤ 59) ist, wenn X von Y verschieden ist,
b) einem Desagglomerationsschritt unterzogen wird und
c) gegebenenfalls einem Selektionsschritt unterzogen wird.

11. Behandelter Mineralfüllstoff gemäß Anspruch 10, **dadurch gekennzeichnet, dass** das Behandlungsmittel ein Gemisch des Mono- und Diesters des sauren Phosphats von Decylalkohol mit 5 mol Ethylenoxid ist.

12. Behandelter Mineralfüllstoff gemäß Anspruch 10, **dadurch gekennzeichnet, dass** das Behandlungsmittel der Monoester des sauren Phosphats von Tristyrylphenol, enthaltend 60 mol Ethylenoxid, ist.

13. Behandelter Mineralfüllstoff gemäß Anspruch 10, **dadurch gekennzeichnet, dass** das Behandlungsmittel ein Gemisch des Mono- und Diesters des sauren Phosphats von Cetostearylalkohol ist.

14. Behandelter Mineralfüllstoff gemäß Anspruch 10, **dadurch gekennzeichnet, dass** das Behandlungsmittel ein Gemisch des Mono- und Diesters des sauren Phosphats von Nonylphenol, enthaltend 10 mol Ethylenoxid, ist.

15. Mineralfüllstoffe gemäß einem der Ansprüche 10 bis 14, **dadurch gekennzeichnet, dass** sie aus natürlichen oder synthetischen Erdalkalicarbonaten, -phosphaten und -sulfaten, Zinkcarbonat, gemischten Magnesium- und Calciumsalzen wie Dolomiten, Kalk, Magnesiumdioxid, Bariumsulfat, Calciumsulfaten, Hydroxiden des Magnesiums, des Aluminiums, Siliciumdioxid, Wollastonit, Tonen und anderen Aluminiumsilicaten wie Kaolinen, Magnesiumsilicaten wie Talk, Glimmer, massiven oder hohlen Glaskugeln, Metalloxiden wie Zinkoxid, Eisenoxiden, Titandioxid und ihren Gemischen bestehen.

16. Mineralfüllstoffe gemäß einem der Ansprüche 10 bis 14, **dadurch gekennzeichnet, dass** sie aus natürlichen Calciumcarbonaten, ausgewählt aus Kreide, Calcit, Marmor, gefälltem Calciumcarbonat, Dolomit, Hydroxiden des Aluminiums oder des Magnesiums, Kaolin, Talk, Wollastonit und ihren Gemischen, bestehen.

17. Mineralfüllstoffe gemäß einem der Ansprüche 10 bis 16, **dadurch gekennzeichnet, dass** sie aus Stoffen mit einem mittleren Durchmesser zwischen 0,1 und 15 µm, vorzugsweise zwischen 0,1 und 10 µm, bestehen.

18. Mineralfüllstoffe gemäß einem der Ansprüche 10 bis 16, **dadurch gekennzeichnet, dass** sie aus Stoffen mit einem mittleren Durchmesser zwischen 0,3 und 8 µm bestehen.

19. Mineralfüllstoffe gemäß einem der Ansprüche 10 bis 18, **dadurch gekennzeichnet, dass** sie aus einem Marmor mit einem mittleren Durchmesser von 8 µm, einem Magnesiumhydroxid mit einem mittleren Durchmesser zwischen 1,4 und 1,8 µm, einem Talk mit einem mittleren Durchmesser von 2,5 µm, einem Dolomit mit einem mittleren Durchmesser von 3 µm, einem Aluminiumhydroxid mit einem mittleren Durchmesser von 0,8 µm, einem Kaolin mit einem mittleren Durchmesser von 0,5 µm, einem gefällten Calciumcarbonat mit einem mittleren Durchmesser von 0,30 µm ausgewählt sind.

20. Mineralfüllstoffe gemäß einem der Ansprüche 10 bis 19, **dadurch gekennzeichnet, dass** sie ihre Hydrophilie beibehalten, während sie eine um mindestens 15% und vorzugsweise um mindestens 20% verringerte Polyolaufnahme, bezogen auf den nicht behandelten Mineralfüllstoff, aufweisen.

21. Suspensionen von Mineralfüllstoffen in Polyolen, **dadurch gekennzeichnet, dass** der Füllstoff ein Füllstoff gemäß einem der Ansprüche 10 bis 20 ist.

22. Suspensionen von Mineralfüllstoffen in Polyolen gemäß Anspruch 21, **dadurch gekennzeichnet, dass** die verwendeten Polyole zu den Familien der Polyether und der Polyester-polyether und der Polyester, unter den Polyetherpolyolen insbesondere zu den Produkten der Addition von Propylenoxid an ein einfaches Polyol wie Glycol, Glycerin, Trimethylolpropan, Sorbitol, in Gegenwart oder Abwesenheit von Ethylenoxid oder speziellen Polyetherpolyolen wie Polyether auf Aminbasis, die durch Addition von Propylenoxid oder gegebenenfalls Ethylenoxid an Amine erhalten werden, halogenierten Polyethern, gepfropften Polyethern, die bei der Copolymerisation von Styrol und Acrylnitril in Suspension in einem Polyether erhalten werden, oder auch Polytetramethylenglycol, unter den Polyesterpolyolen insbesondere zu denen, die bei der Polykondensation von Polyalkoholen an Polysäuren oder ihre Anhydride, wie Disäuren wie Adipinsäure, Phthalsäure oder anderen erhalten werden, die mit Diolen wie Ethylenglycol, Propylenglycol, Butylenglycol oder anderen, Triolen wie Glycerin, Trimethylolpropan oder anderen und Tertrolen wie Pentaerythritol oder anderen, allein oder im Gemisch, reagieren, oder zu verschiedenen hydroxylierten Verbindungen wie hydroxylierten Polybutadienen, Vorpolymeren mit Hydroxyl-Endgruppen, die bei der Reaktion eines Überschusses von Polyol mit einem Diisocyanat erhalten werden, oder zu den einfachen Polyolen, wie Glycerin, Aminoalkoholen, die in kleinen Mengen mit den Polyetherpolyolen oder den Polyesterpolyolen umgesetzt werden, gehören.

23. Suspensionen von Mineralfüllstoffen in Polyolen gemäß Anspruch 21 oder 22, **dadurch gekennzeichnet, dass** sie andere mineralische und/oder organische Stoffe, wie Katalysatoren und/oder Antioxidationsmittel und/oder andere, enthalten.

24. Suspensionen von Mineralfüllstoffen in Polyolen gemäß einem der Ansprüche 21 bis 23, **dadurch gekennzeichnet, dass** die Konzentration, bezogen auf die Trockensubstanz, der behandelten mineralischen Materialien 80 Gew.-% erreichen kann, und dadurch, dass sie nach einer ruhigen Lagerung von 7 Tagen zur Herstellung von weichen, halbharten oder harten Polyurethanschäumen keiner wesentlichen Dekantation, Sedimentation oder Eindickung unterliegen, d.h., dass sie eine scheinbare Brookfield-Viskosität aufweisen, die stabil ist und unter der von Suspensionen der nicht behandelten Mineralfüllstoffen liegt, und dadurch, dass sie 0,5 Gew.-% bis 3 Gew.-%, bezogen auf das Gewicht des Mineralfüllstoffs, mindestens eines Behandlungsmittels der allgemeinen Formel (1) enthalten.

25. Vorgemische von Mineralfüllstoffen mit einem Polyol, insbesondere in Mengenverhältnissen, die für die Herstellung von Polyurethanen und insbesondere von Polyurethanschäumen, entweder durch Schäumen ohne zusätzliches Treibmittel oder durch Schäumen mit einem zusätzlichen Treibmittel wie Methylenchlorid, Aceton oder CO₂ oder anderen, oder von Verbundpolyurethanen, angepasst sind, **dadurch gekennzeichnet, dass** die Füllstoffe durch ein Verfahren gemäß einem der Ansprüche 1 bis 9 vorbehandelt sind.

26. Vorgemische von Mineralfüllstoffen mit einem Polyol gemäß Anspruch 25, **dadurch gekennzeichnet, dass** der Füllstoff aus einem wie in einem der Ansprüche 15 bis 19 beschriebenen Füllstoff, insbesondere aus natürlichen Calciumcarbonaten, ausgewählt aus Kreide, Calcit und Marmor, gefälltem Calciumcarbonat, Dolomit, Hydroxiden des Aluminiums oder des Magnesiums, Kaolin, Talk, Wollastonit und ihren Gemischen, besteht.

27. Verwendung der Mineralfüllstoff-Polyol-Vorgemische gemäß Anspruch 25 oder 26 zur Herstellung von weichen, halbharten oder harten Polyurethanschäumen, entweder durch das Verfahren durch Schäumen ohne zusätzliches Treibmittel oder durch Schäumen mit einem zusätzlichen Treibmittel, wie Methylenchlorid, Aceton oder CO₂ oder anderen, und zur Herstellung von Verbundpolyurethanen.

28. Verwendung der Mineralfüllstoff-Polyol-Vorgemische gemäß Anspruch 25 oder 26 zur Herstellung von zelligen oder nichtzelligen Verbundmaterialien mit Polyurethanmatrix, wie mit pflanzlichen Fasern oder Glas oder Quarz oder synthetischen Fasern, üblicherweise geschnittenen Fasern, oder Analogem verstärkten Polyurethanen, insbesondere auf dem Gebiet von Teilen für die Automobilindustrie, für den Transport-, insbesondere den Straßen- oder Bahntransportsektor und von industriellen Teilen für diverse Anwendungen.

29. Weiche, halbharte oder harte Polyurethanschäume, die entweder durch das Verfahren durch Schäumen ohne zusätzliches Treibmittel oder durch Schäumen mit einem zusätzlichen Treibmittel, wie Methylenchlorid, Aceton oder CO₂ oder anderen, erhalten werden, **dadurch gekennzeichnet, dass** sie einen vorbehandelten Füllstoff gemäß einem der Ansprüche 10 bis 20 enthalten.

30. Zellige oder nichtzellige Verbundpolyurethane, **dadurch gekennzeichnet, dass** sie einen vorbehandelten Füllstoff gemäß einem der Ansprüche 10 bis 20 enthalten.

31. Geformte oder nicht geformte Gegenstände, **dadurch gekennzeichnet, dass** sie ausgehend von den gemäß Anspruch 29 oder 30 erhaltenen Schäumen und Verbundpolyurethanen erhalten werden.

## Claims

1. A method of treating mineral fillers aimed at the manufacture of PUR foams or of composite PUR **characterised in that** said filler
a) is treated using at least one compound of the general formula (1): 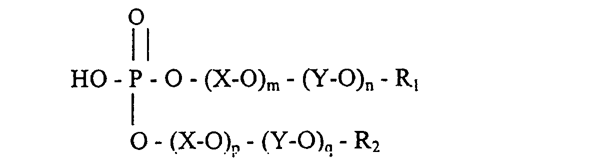
where R₁ = either H or alkyl with 8 to 40 carbon atoms or aryl or alkylaryl or arylalkyl with 6 to 40 carbon atoms
where R₂ = either alkyl with 8 to 40 carbon atoms or aryl or alkylaryl or arylalkyl with 6 to 40 carbon atoms
X = -CH₂-CH₂- or -CH(CH₃)-CH₂-
or -CH₂-CH(CH₃) or -(CH₂)₅-CO-
Y = -CH₂-CH₂- or -CH(CH₃)-CH₂-
or -CH₂-CH(CH₃)- or -(CH₂)₅-CO-
X and Y being the same or different,
(m+n) varies from 0 to 60 (boundaries included) as well as (p+q) where 0 ≤ m+n ≤ 60 and 0 ≤ p+q ≤ 60 when X=Y= -CH₂-CH₂-
and
where (1 ≤ m ≤ 10 and 1 ≤ p ≤ 10) and (0 ≤ n ≤ 59 and 0 ≤ q ≤ 59) if X is different from Y.
b) undergoes a de-agglomeration step and
c) optionally undergoes a selection step.

2. A method of treating mineral fillers as claimed in claim 1, **characterised in that** said treatment agent is an acid phosphate of aliphatic alcohol, branched or not with 8 to 20 carbon atoms, on which from 0 to 12 ethylene oxide chains are condensed and optionally containing a mixture of mono-esters and di-esters.

3. A method of treating mineral fillers as claimed in claim 1 or 2, **characterised in that** said treatment agent is a mixture of mono-ester and di-ester of acid phosphate of decyl alcohol with 5 mols of ethylene oxide.

4. A method of treating mineral fillers as claimed in claim 1, **characterised in that** said treatment agent is the mono-ester of acid phosphate of tristyrylphenol containing 60 mols of ethylene oxide.

5. A method of treating mineral fillers as claimed in claim 1 or 2, **characterised in that** said treatment agent is a mixture of mono-ester and di-ester of acid phosphate of ketostearyl alcohol.

6. A method of treating mineral fillers as claimed in claim 1 or 2, **characterised in that** said treatment agent is a mixture of mono-ester and di-ester of acid phosphate of nonylphenol containing 10 mols of ethylene oxide.

7. A method of treating mineral fillers as claimed in claim 1, **characterised in that** said treatment is applied by a dry method or by a wet method.

8. A method of treating mineral fillers as claimed in any one of claims 1 to 7, **characterised in that** said filler is selected from amongst: the carbonates, phosphates and sulphates of natural or synthetic alkaline earths, zinc carbonate, the combined salts of magnesium and calcium such as dolomites, lime, magnesia, barium sulphate, calcium sulphates, magnesiumhydroxides, aluminium hydroxides, silica, wollastonite, the clays and other silico-alumina such as the kaolins, silica-magnesia such as talc, mica, solid or hollow glass beads, the metal oxides such as zinc oxide, the iron oxides, titanium oxide and mixtures thereof.

9. A method of treating mineral fillers as claimed in any one of claims 1 to 7, **characterised in that** said filler is selected from amongst: the natural calcium carbonates selected from chalk, calcite and marble, precipitated calcium carbonate, dolomite, the aluminum or magnesium hydroxides, kaolin, talc, wollastonite and mixtures thereof.

10. A treated mineral filler of a specific grain size for the manufacture of polyurethane foams by a method whereby said filler is mixed with at least some of the polyol in the reaction forming the polyurethane and having a shorter mixing time with the polyol and the other reagents, **characterised in that** it
a) is treated using at least one compound of the general formula (1): 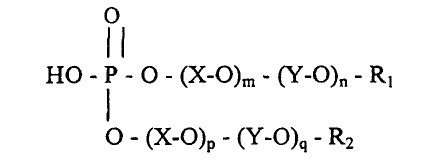
where R₁ = either H or alkyl with 8 to 40 carbon atoms or aryl or alkylaryl or arylalkyl with 6 to 40 carbon atoms
where R₂ = either alkyl with 8 to 40 carbon atoms or aryl or alkylaryl or arylalkyl with 6 to 40 carbon atoms
X = -CH₂-CH₂- or -CH(CH₃)-CH₂-
or -CH₂-CH(CH₃) or -(CH₂)₅-CO-
Y = -CH₂-CH₂- or -CH(CH₃)-CH₂-
or -CH₂-CH(CH₃)- or -(CH₂)₅-CO-
X and Y being the same or different,
(m+n) varies from 0 to 60 (boundaries included) as well as (p+q) where 0 ≤ m+n ≤ 60 and 0 ≤ p+q ≤ 60 when X=Y= -CH₂-CH₂-
and
where (1 ≤ m ≤ 10 and 1 ≤ p ≤ 10) and (0 ≤ n ≤ 59 and 0 ≤ q ≤ 59) if X is different from Y.
b) undergoes a de-agglomeration step and
c) optionally undergoes a selection step.

11. A treated mineral filler as claimed in claim 10, **characterised in that** said treatment agent is a mixture of mono-ester and di-ester of acid phosphate of decyl alcohol with 5 mols of ethylene oxide.

12. A treated mineral filler as claimed in claim 10, **characterised in that** said treatment agent is the mono-ester of acid phosphate of tristyrylphenol containing 60 mols of ethylene oxide.

13. A treated mineral filler as claimed in claim 10, **characterised in that** said treatment agent is a mixture of mono-ester and di-ester of acid phosphate of ketostearyl alcohol.

14. A treated mineral filler as claimed in claim 10, **characterised in that** said treatment agent is a mixture of mono-ester and di-ester of acid phosphate of nonylphenol containing 10 mols of ethylene oxide.

15. Mineral fillers as claimed in any one of claims 10 to 14, **characterised in that** they consist of carbonates, phosphates and sulphates of natural or synthetic alkaline earths, zinc carbonate, the combined salts of magnesium and calcium such as dolomites, lime, magnesia, barium sulphate, calcium sulphates, magnesium hydroxides, aluminium hydroxide, silica, wollastonite, the clays and other silico-alumina such as the kaolins, silica-magnesia such as talc, mica, solid or hollow glass beads, the metal oxides such as zinc oxide, the iron oxides, titanium oxide and mixtures thereof.

16. Mineral fillers as claimed in any one of claims 10 to 14, **characterised in that** they consist of natural calcium carbonates selected from chalk, calcite and marble, precipitated calcium carbonate, dolomite, aluminum or magnesium hydroxides, kaolin, talc, wollastonite and mixtures thereof.

17. Mineral fillers as claimed in anyone of claims 10 to 16, **characterised in that** they consist of products having an average diameter of between 0.1 and 15 micrometres, preferably between 0.1 and 10 micrometres.

18. Mineral fillers as claimed in any one of claims 10 to 16, **characterised in that** they consist of products having an average diameter of between 0.3 and 8 micrometres.

19. Mineral fillers as claimed in any one of claims 10 to 18, **characterised in that** they are selected from amongst the following: a marble with an average diameter of 8 micrometres, a magnesium hydroxide with an average diameter of between 1.4 and 1.8 micrometres, a talc with an average diameter of 2.5 micrometres, a dolomite with an average diameter of 3 micrometres, an aluminium hydroxide with an average diameter of 0.8 micrometres, a kaolin with an average diameter of 0.5 micrometres, a precipitated calcium carbonate with an average diameter of 0.30 micrometres.

20. Mineral fillers as claimed in any one of claims 10 to 19, **characterised in that** they conserve their hydrophilic nature whilst exhibiting an up-take of polyol reduced by at least 15% and preferably at least 20% relative to the untreated mineral filler.

21. Suspensions of mineral fillers in polyols, **characterised in that** the filler is a filler as claimed in any one of claims 10 to 20.

22. Suspensions of mineral fillers in polyols, as claimed in claim 21, **characterised in that** the polyols used belong to the families of the polyethers and polyesters-polyethers and the polyesters, in particular, among the polyol polyethers the addition products of propylene oxide on a simple polyol such as glycol, glycerol, trimethylolpropane, sorbitol, in the presence of ethylene oxide or not, or the special polyol polyethers such as the amine-based polyethers obtained by the addition of propylene oxide or optionally ethylene oxide on amines, halogen polyethers, grafted polyethers resulting from the copolymerisation of styrene and acrylonitrile in suspension in a polyether, or alternatively polytetramethylene glycol, in particular among the polyol polyesters those resulting from the polycondensation of polyalcohols on polyacids or their anhydrides, such as the diacids, such as adipic, phthalic or other diacids, reacting with diols such as ethylene glycol, propylene glycol, butylene glycol or others, triols such as glycerol, trimethylolpropane or others and tetrols such as pentaerythritol or others, alone or in a mixture, or various hydroxyl compounds such as hydroxylated polybutadienes, the prepolymers with hydroxyl terminations resulting from the reaction of excess polyol on a diisocyanate or the simple polyols such as glycerol, amino alcohols used in a small quantity with the polyol polyethers or the polyol polyesters.

23. Suspensions of mineral fillers in polyols as claimed in claim 21 or claim 22, **characterised in that** they contain other mineral and/or organic products such as catalysts and/or anti-oxidants and/or others.

24. Suspensions of mineral fillers in polyols as claimed in any one of claims 21 to 23, **characterised in that** the concentration of dry substance of the treated mineral substances may be as high as 80% by weight, and **in that** they are not susceptible either to decantation or sedimentation or damning thickening after storage for 7 days in readiness for the manufacture of flexible, semi-rigid or rigid polyurethane foams, i.e. having a stable apparent Brookfield viscosity which is lower than that of suspensions of mineral fillers which have not been treated and **in that** they contain 0.5% to 3% by weight, relative to the weight of the mineral filler, of at least one treatment agent having the general formula (1).

25. Pre-mixtures of mineral fillers with a polyol and in particular in proportions appropriate for the manufacture of polyurethanes and more specifically polyurethane foams either by foaming without an auxiliary blowing agent or by foaming with an auxiliary blowing agent such as methylene chloride, acetone or CO₂ or others, or composite polyurethanes, **characterised in that** the fillers are pre-treated by a method as claimed in any one of claims 1 to 9.

26. Pre-mixtures of mineral fillers with a polyol as claimed in claim 25, **characterised in that** the filler consists of a filler such as described in any one of claims 15 to 19, in particular natural calcium carbonates selected from among chalk, calcite and marble, precipitated calcium carbonate, dolomite, aluminium or magnesium hydroxides, kaolin, talc, wollastonite and mixtures thereof.

27. Use of the pre-mixtures of mineral filler and polyol as claimed in claims 25 or 26 for the manufacture of flexible, semi-rigid or rigid polyurethane foams by the method, either by foaming without an auxiliary blowing agent or by foaming with an auxiliary blowing agent such as methylene chloride, acetone or CO₂ or others, and for the manufacture of composite polyurethanes.

28. Use of pre-mixtures of mineral filler and polyol as claimed in claim 25 or 26 for the manufacture of composite materials with a polyurethane matrix, cellular or not, such as polyurethanes reinforced with vegetable fibres or glass or quartz or synthetic fibres, cut fibres in general, or similar, in particular in the field of accessories for the automotive industry, for the transport sector, in particular road or rail, and industrial accessories used in a variety of applications.

29. Flexible, semi-rigid or rigid polyurethane foams obtained by the method either by foaming without an auxiliary blowing agent or by foaming with an auxiliary blowing agent such as methylene chloride, acetone or CO₂ or others, **characterised in that** they incorporate a filler pre-treated as claimed in any one of claims 10 to 20.

30. Composite polyurethanes, cellular or not, **characterised in that** they incorporate a filler pre-treated as claimed in any one of claims 10 to 20.

31. Objects, moulded or not, **characterised in that** they are obtained from foams and composite polyurethanes obtained as claimed in claim 29 or 30.
